# EUROPÄISCHE PATENTSCHRIFT

(11) **EP 3 126 116 B1**
(45) Veröffentlichungstag und Bekanntmachung des Hinweises auf die Patenterteilung: **01.06.2022**
(21) Anmeldenummer: 15713733.2
(22) Anmeldetag: 31.03.2015
(51) Int. Cl.: B29C 45/14, B22C 9/22, B22D 19/04, F16B 37/12, B22D 19/00, B22D 17/24, F16B 37/04, B29L 1/00

(54) **EINLEGETEIL FÜR EINE GUSSFORM UND GUSSVERFAHREN**
INSERT FOR A CASTING MOLD AND A CASTING METHOD
PIÈCE D'INSERTION POUR MOULE ET PROCÉDÉ DE MOULAGE

(30) Priorität: 31.03.2014 DE 102014206088; 10.11.2014 DE 102014222908
(43) Veröffentlichungstag der Anmeldung: 08.02.2017
(73) Patentinhaber: Böllhoff Verbindungstechnik GmbH, 33649 Bielefeld (DE); Fraunhofer-Gesellschaft zur Förderung der angewandten Forschung e.V., 80686 München (DE)
(72) Erfinder: HAESCHE, Marco, 27711 Osterholz-Scharmbeck (DE); WÖSTMANN, Franz-Josef, 48163 Münster (DE); PILLE, Christoph, 28203 Bremen (DE); HEUSER, Michael, 28201 Bremen (DE); STUMPF, Michael, 33611 Bielefeld (DE); TOVAR, Francisco, 33659 Bielefeld (DE); BEYER, Tobias, 77880 Sasbach (DE)
(74) Vertreter: HWP Intellectual Property
(86) Internationale Anmeldenummer: PCT/EP2015/056956
(87) Internationale Veröffentlichungsnummer: WO 2015/150356

(56) Entgegenhaltungen:
- EP-A1- 2 168 750
- WO-A1-97/25172
- WO-A1-2014/057027
- CH-A- 251 484
- DE-A1- 19 831 940
- DE-A1-102009 048 160
- JP-A- H0 671 691
- JP-A- H01 275 953
- US-A- 2 480 966
- US-A- 3 945 070
- US-A- 4 788 022
- US-A- 4 844 143
- US-A- 4 867 663
- US-A1- 2008 166 204
- Quitter: "Neue Qualitäten beim Umspritzen von Einlegeteilen", konstruktionspraxis, 18 January 2007 (2007-01-18), pages 1-1, XP055653104, Retrieved from the Internet: URL:https://www.konstruktionspraxis.vogel. de/neue-qualitaeten-beim-umspritzen-von-ei nlegeteilen-a-112223/ [retrieved on 2019-12-16]
- Günter Mennig: "Mold-Making Handbook" In: "Mold-Making Handbook", 1 October 2013 (2013-10-01), Carl Hanser Verlag, XP055707803, ISBN: 978-1-56990-446-6 pages 417-420,

## Beschreibung

### 1. Gebiet der Erfindung

Die vorliegende Erfindung betrifft ein Einlegeteil, das in ein Metallgussteil oder ein Kunststoffspritzgussteil einformbar ist, sowie ein Metallgussverfahren und ein Kunststoffspritzgussverfahren.

### 2. Hintergrund der Erfindung

Metall- und Kunststoffschmelzen, die zum Gießen von Bauteilen eingesetzt werden, weisen im Temperaturbereich des schmelzflüssigen Zustands eine sehr niedrige Viskosität auf. Diese Eigenschaft führt dazu, dass bereits kleinste Spalte und Hohlräume, beispielsweise in einem Einlegeteil oder in einer Gussform, beim Vergießen dieser Schmelzen infiltriert werden. Dies ist gerade bei druckunterstützten Gießverfahren der Fall, wie beispielsweise beim Aluminiumdruckguss oder bei Spritzgussverfahren für Kunststoffe. Beim Ein- und Umgießen von Einlegeteilen, wie beispielsweise Gewindeeinsätzen, mit einer Metallschmelze oder mit flüssigem Kunststoff besteht somit die Gefahr, dass die flüssigen Werkstoffe in das Einlegeteil, beispielsweise den Gewindegang des oben genannten Gewindeeinsatzes, infiltriert werden und dadurch die spätere Funktion des Einlegeteils beeinträchtigen. Zur nachträglichen Einbringung von Innengewinden bei gegossenen Bauteilen, beispielsweise aus Metall oder Kunststoff, besteht grundsätzlich die Möglichkeit, dass diese in einem nachfolgenden Prozessschritt durch spanende Fertigungsverfahren eingearbeitet werden. Beim nachträglichen Einarbeiten des Gewindes in das Gussmaterial kann es allerdings zur Freilegung von im Gussmaterial vorhandener Porositäten kommen, die die Belastbarkeit des Gewindes schwächen und zu Ausschuss führen.

Eine Möglichkeit zur Erzeugung von Innengewinden während des Gießprozesses ist die Verwendung von sogenannten Einfallkernen. Diese Technik kommt aus dem Kunststoffspritzguss und konnte auf den Zinkdruckguss übertragen werden. Die Einfallkerne besitzen die abzubildende Struktur radial auf der Kernoberfläche. Durch eine Segmentierung des Kerns ist es möglich, den Einfallkern nach Erstarrung der Schmelze "einzufalten" und das Bauteil auf diese Weise zu entformen.

Sowohl beim Metalldruckguss als auch beim Sand- oder Kokillenguss können Innengewinde auch durch das nachträgliche Einbringen von Gewindebuchsen erzeugt werden. Etabliert haben sich zum Beispiel selbstschneidende Gewindebuchsen aus gehärtetem Stahl, die direkt in vorgegossene Bohrungen eingedreht werden können. Eine breite Anwendung finden auch Drahtgewindeeinsätze, bei denen in eine vorgegossene Bohrung ein Muttergewinde eingeschnitten wird, in welches anschließend der Drahtgewindeeinsatz eingeschraubt werden kann. Die Vorteile sind ein sicherer Flankenkontakt über die komplette Länge des Gewindes und eine Erhöhung der Festigkeit der gesamten Verbindung um 25-30 %. Diese Vorteile können konstruktiv bezüglich kleiner Einbautiefen bzw. kleiner Gewindedurchmesser genutzt werden.

Das Eingießen von Einlegeteilen, wie beispielsweise metallische Einsätze, in Metallschmelzen oder Kunststoffschmelzen ist bekannt und wird unter dem Begriff "Werkstoffverbunde" oder "Verbundguss" beschrieben. In Motorkolben aus Aluminiumguss werden beispielsweise Kolbenringsitze aus einer Eisen-Nickel-Legierung eingegossen. Das Eingießen von stahlbasierten Gewindeeinsätzen im Aluminiumguss verfolgt das Ziel, eine höhere Belastbarkeit zu erreichen, als es ein in Aluminium eingeschnittenes Gewinde bietet. Der Sitz des eingegossenen Einsatzes erfolgt durch einen form- und kraftschlüssigen Verbund, der durch Aufschrumpfen des erstarrenden Gussmetalls erreicht wird.

Die Patentschrift EP 1 046 446 B1 beschreibt ein gießtechnisch hergestelltes Metallgussteil mit direkt eingegossener, lückenlos gewickelter Drahtwendel. Die Drahtwendel fungiert als Gewindegang im Gussteil und ist von beiden Seiten frei zugänglich. Die gießtechnische Integration erfolgt derart, dass eine Formhälfte eines zweiteiligen Gießwerkzeugs einen festen zylindrischen Kernstift hat, auf den die zweiseitig offene, lückenlose Drahtwicklung (ähnlich einer Spirale) mit eng anliegenden Wicklungen aufgesteckt wird. Anschließend wird das Formwerkzeug geschlossen und von der anderen Seite wird ebenfalls ein zylindrischer Kernstift in die Drahtwicklung eingeschoben. Beide Kernstifte sind zum Ende der Wicklungen hin leicht konisch aufgeweitet, so dass sie beim Schließen des Formwerkzeuges die Drahtwicklung leicht auseinander dehnen und somit ein dichtes Anpressen des Kernstiftes auf die Drahtwicklung gewährleisten. Nichtsdestotrotz hat sich ein stirnseitges Eindringen von Metallschmelze während des Gießens als nachteilig erwiesen, da dadurch Gewindegänge blockiert werden.

Des Weiteren lässt sich mit dem hier beschriebenen technischen Lösungsansatz lediglich ein durchgehendes, beidseitiges offenes Gewinde in einem Gussteil erzeugen. Es ist jedoch kein Gewindegrundloch herstellbar, das nur einseitig offen ist. Zudem wird kein Lösungsweg beschrieben, um das Eindringen von Metallschmelzen in den freiliegenden Gewindegang des Drahtgewindeeinsatzes, also am Eingang und am Ausgang des Drahtgewindeeinsatzes, prozesssicher zu verhindern.

In US 3,945,070 ist ein Verfahren zum Eingießen eines Drahtgewindeeinsatzes in Metallschmelze beschrieben. Während des Gussverfahrens ist der Drahtgewindeeinsatz auf einem Stift angeordnet. Das Erstarren der Metallschmelze nach dem Gussverfahren führt zu einer Materialschrumpfung, die die Gewindesteigung des Drahtgewindeeinsatzes verändert. Diese Materialveränderung wird bewusst in die Gewindesteigung des Drahtgewindeeinsatzes einberechnet, sodass sich nach Erstarren des Gussteils die gewünschte Steigung des Gewindes ergibt. US 3,945,070 liefert aber keine Informationen dazu, wie das seitliche und das stirnseitige Eindringen von niedrigviskoser Materialschmelze verhindert werden kann.

In US 3,112,540 wird die Herstellung eines Sacklochs mit Drahtgewindeeinsatz in einem Gussteil offenbart. Der Drahtgewindeeinsatz wird dazu auf einen Haltekern mit Gewinde aufgeschraubt und nachfolgend in die Metallschmelze eingeformt. Um eine bessere Festigkeit des Drahtgewindeeinsatzes im ausgehärteten Gussteil zu erzielen, werden mehrere Gewindegänge an der geschlossenen Seite des Sacklochs in die Metallschmelze eingegossen.

In US 2,672,070 wird ein Drahtgewindeeinsatz in ein Gussteil eingeformt, ohne dass das flüssige Material des Gussteils in radialer Richtung in das Innere des Drahtgewindeeinsatzes eindringen kann. Zu diesem Zweck sind die Querschnitte benachbarter Windungen derart geformt, dass sie ähnlich einer Labyrinthdichtung aneinander anliegen. Des Weiteren ist im Verlauf dieser Labyrinthdichtung ein Hohlraum vorgesehen, in dem möglicherweise eingedrungene Materialschmelzen erstarren können. Diese erstarrte Schmelze blockiert dann zusätzlich zur Labyrinthdichtung das Eindringen des flüssigen Materials in das Innere des Drahtgewindeeinsatzes. Neben der aufwendigen Herstellung derartiger Drahtgewindeeinsätze ist das hier beschriebene Lösungskonzept nicht für Metallgussverfahren beschrieben.

DE 10 2009 048 160 A1 beschreibt einen Drahtgewindeeinsatz zum Einformen in ein Gussteil aus Metall- oder Kunststoffschmelze, der zumindest an einer axialen Stirnseite einen gewickelten Flansch aufweist. Mithilfe dieses Drahtgewindeeinsatzes sind sowohl Durchgangslöcher wie auch Sacklöcher in einem Gussteil herstellbar. Um ein radiales Eindringen von Kunststoff oder Metallschmelze in das Innere des Drahtgewindeeinsatzes zu vermeiden, liegen benachbarte Windungen ähnlich einer Labyrinthdichtung flächig aneinander an oder die radiale Außenseite des Drahtgewindeeinsatzes ist durch eine geeignete und von außen aufgebrachte Dichtmasse abgedichtet.

Eine Form zur Befestigung eines Metallteils auf einer der Oberflächen einer ophthalmischen Linse ist in US 4,844,143 A beschrieben. Die zylindrische Seitenwand des Formhohlraums weist einen Innendurchmesser auf, der größer ist als der größte vorhandene ophthalmologische Linsendurchmesser, und eine im Allgemeinen zylindrische Membran aus Elastomermaterial ist konzentrisch innerhalb des Formhohlraums angeordnet, so dass sie in Verbindung mit der zylindrischen Seitenwand des Hohlraums eine ringförmige Kammer mit variablem Volumen definiert. Die Membran ist unter der Wirkung eines Fluids, das abwechselnd aus der ringförmigen Kammer entfernt und in sie eingelassen wird, radial ausdehnbar und zurückziehbar.

WO 2014/057027 A1 beschreibt schließlich ein Bauteil mit Dichtstopfen sowie ein Verfahren zum Einformen eines Bauteileinsatzes. Der Bauteileinsatz weist einen Dichtstopfen auf, so dass der Bauteileinsatz in fließfähigen, aushärtbaren Materialien oder in Materialien, die mit fließfähigen, aushärtbaren Flüssigkeiten getränkt sind, einformbar ist. Der Dichtstopfen dichtet dabei den Bauteileinsatz (in diesem Fall einen Drahtgewindeeinsatz) gegen das Eindringen des fließfähigen, aushärtbaren Materials ab.

Die Beschreibung des Standes der Technik zeigt, dass insbesondere bei gegossenen Bauteilen aus Nichteisenmetall der Einsatz von Gewindeeinsätzen technische Vorteile bietet, v.a. hinsichtlich der mechanischen Belastbarkeit des Gewindes. Hierzu bestehen Verfahren zum nachträglichen Einbringen von Gewindeeinsätzen mittels mechanischer Bearbeitung des Gussteils (z.B. bei Verwendung von Drahtgewindeeinsätzen), deren zwei- oder mehrstufiger Prozess nachteilig und wirtschaftlich aufwendig ist. Ein weiterer Ansatz ist das direkte Eingießen von Gewindeeinsätzen im Metallgussverfahren. Es bestehen jedoch keine technischen Beschreibungen zum prozesssicheren Verhindern des Eindringens von Metallschmelze oder Kunststoffschmelze in den Gewindegang eines Einlegeteils beim Ein- oder Umgießen der Schmelze. Auch findet sich kein Hinweis im Stand der Technik, wie sich die mit hoher Geschwindigkeit in die Gussform eingebrachte Metall- oder Kunststoffschmelze auf den Gewindeeinsatz in der Gussform auswirkt. Gleiches gilt für die Betrachtung von Materialschwindungsvorgängen bei Abkühlung der Materialschmelze in der Gussform. Sollte eine Materialschwindung innerhalb des abkühlenden Gussbauteils unterschiedlich bezogen auf die möglichen Raumrichtungen erfolgen, entstehen die Integrität des Gussbauteils beeinträchtigende mechanische Spannungszustände und Versagenszustände. Es ist daher im Stand der Technik von Nachteil, die Möglichkeit solcher Zustände nicht zu erkennen und keine Gegenmaßnahmen zu ergreifen.

Eine direkte Integration von Einlegeteilen, bspw. Drahtgewindeeinsätze, im Gießprozess bietet wirtschaftliche und technische Vorteile, v.a. aufgrund der kostengünstigen Herstellung des Gewindeeinsatzes im Drahtwickelverfahren. Jedoch besteht insbesondere bei Verwendung von Drahtgewindeeinsätzen die Gefahr, dass nicht nur über die eine bzw. die zwei offenen Stirnseiten des Gewindeeinsatzes Materialschmelze in den Gewindegang infiltrieren kann, sondern darüber hinaus auch durch die einzelnen Gewindegänge, die lediglich durch Anpressen dicht aneinander liegen. Dieser Aspekt wird v.a. beim Ein- oder Umgießen von Drahtgewindeeinsätzen in druckunterstützen Metallgussverfahren und Kunststoffspritzgussverfahren kritisch. Eine technische Lösungsbeschreibung hierzu besteht nach aktuellem Stand der Technik nicht.

Es ist daher die Aufgabe vorliegender Erfindung, eine gießtechnische Integration von Einlegeteilen, insbesondere von Drahtgewindeeinsätzen, während der Gießprozesse mittels Metallschmelze oder Kunststoffschmelze bereitzustellen, wobei prozesssicher ein Einfließen von Metall- oder Kunststoffschmelze in das Innere der Einlegeteile verhindert ist. Zudem ist es Aufgabe vorliegender Erfindung, Schwindungsvorgänge im Gussmaterial zu berücksichtigen und den daraus resultierenden Belastungen im Gussbauteil entgegenzuwirken.

### 3. Zusammenfassung der Erfindung

Die obige Aufgabe wird durch ein Einlegeteil gemäß dem unabhängigen Patentanspruch 1 sowie durch ein Metallgussverfahren oder ein Kunststoffspritzgussverfahren gemäß dem unabhängigen Patentanspruch 6 gelöst. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Zum besseren Verständnis wird zunächst eine Metallgussform beschrieben, insbesondere für ein druckunterstütztes Metallgussverfahren, mit der ein Gussteil herstellbar ist. Die Metallgussform weist die folgenden Merkmale auf: einen Formhohlraum, der durch eine Mehrzahl von Innenwänden definiert ist und eine Form des Gussteils vorgibt, eine Positioniervorrichtung für mindestens ein Einlegeteil, die durch mindestens eine Innenwand der Metallgussform derart gehalten ist, dass das Einlegeteil innerhalb des Formhohlraums positionierbar ist, wobei an oder nahe der Positioniervorrichtung sowie zwischen der mindestens einen Innenwand der Metallgussform und dem Einlegeteil ein vorzugsweise flexibles Dichtelement angeordnet ist, mit dem das Einlegeteil gegen das Eindringen von Metallschmelze zumindest teilweise abdichtbar ist. In ähnlicher konstruktiver Ausgestaltung weist eine Kunststoffspritzgussform, mit der ein Kunststoffteil herstellbar ist, die folgenden Merkmale auf: einen Formhohlraum, der durch eine Mehrzahl von Innenwänden definiert ist und eine Form des Kunststoffteils vorgibt, eine Positioniervorrichtung für mindestens ein Einlegeteil, die durch mindestens eine Innenwand der Kunststoffspritzgussform derart gehalten ist, dass das Einlegeteil innerhalb des Formhohlraums positionierbar ist, wobei an oder nahe der Positioniervorrichtung sowie zwischen der mindestens einen Innenwand der Kunststoffspritzgussform und dem Einlegeteil ein vorzugsweise flexibles Dichtelement angeordnet ist, mit dem das Einlegeteil gegen das Eindringen von flüssigem Kunststoff zumindest teilweise abdichtbar ist.

Die Metallgussform sowie die Kunststoffspritzgussform zeichnen sich durch verwandte konstruktive Merkmale aus. Daher sind die beschriebenen konstruktiven Merkmale, beispielsweise der Metallgussform, in gleicher Weise auf die Kunststoffspritzgussform übertragbar. Die Metallgussform und die Kunststoffspritzgussform werden aus diesem Grund zusammenfassend als Gussform bezeichnet. Die Gussformen sind auf das Einformen von zumindest einem Einlegeteil, wie beispielsweise ein Drahtgewindeeinsatz, abgestimmt. Daher weisen diese Gussformen eine Positioniervorrichtung auf, die das mindestens eine Einlegeteil im vordefinierten Formhohlraum geeignet positioniert und festhält, während eine flüssige Materialschmelze, wie beispielsweise eine Metallschmelze oder eine Kunststoffschmelze, in den Formhohlraum eingebracht wird. Die Metallschmelze oder Kunststoffschmelze zeichnet sich je nach dem Temperaturbereich der Schmelze und den Materialeigenschaften durch eine niedrige Viskosität aus. Des Weiteren ist es bevorzugt, die Materialschmelzen unter Druck stehend in die Gussform einzugießen. Da die Materialschmelze die Eigenschaft hat, in kleinste Zwischenräume einzudringen, ist es erforderlich, einen inneren Hohlraum eines Einlegeteils, beispielsweise ein Innengewinde in einem Drahtgewindeeinsatz, von dieser Materialschmelze zumindest teilweise freizuhalten. Aufgrund der Fließfähigkeit der Materialschmelze dringt diese beispielsweise an der stirnseitigen Grenzfläche zwischen dem Einlegeteil und einer Innenwand des Formhohlraums der Metallgussform in das Einlegeteil ein. Daher wird erfindungsgemäß zwischen der Innenwand der Metallgussform und dem Einlegeteil ein Dichtelement angeordnet, welches aufgrund seiner bevorzugten Flexibilität Spalte und/oder Hohlräume an dieser Grenzfläche schließt und auf diese Weise das stirnseitige Eindringen von Materialschmelze in einen Innenraum des Einlegeteils verhindert. Dabei zeichnet sich das flexible Dichtelement durch seine Temperatur- und Druckbeständigkeit mindestens im Hinblick auf die bereitgestellte Dichtfunktion aus, die während des Gussverfahrens erhalten bleibt. Des Weiteren ist das Dichtelement vorzugsweise nach dem Entformen des Gussteils aus der Gussform vom Gussteil entfernbar, sodass es das Einlegeteil und/oder das Gussteil weder in seiner Funktion noch in seiner Konstruktion negativ beeinflusst. In gleicher Weise ist es bevorzugt, das Dichtelement in der Gussform oder am fertigen Gussteil zu belassen, falls dadurch die weitere Verarbeitung und/oder Nutzung des Gussteils oder die weitere Nutzung der Gussform nicht beeinträchtigt werden.

Um das Dichtelement zwischen einer Innenwand der Gussform und dem Einlegeteil wirksam anordnen zu können, weist die Positioniervorrichtung der Gussform einen lösbar oder fest in der Metallgussform angeordneten Haltekern auf, an dem das Einlegeteil und das Dichtelement befestigbar sind. Dieser Haltekern besteht vorzugsweise aus Metall, Kunststoff, Keramik oder aus einer Kombination einer Auswahl dieser Materialien.

Gemäß einer bevorzugten Ausführungsform vorliegender Erfindung ist das Dichtelement ringförmig ausgebildet. Es umgibt den Haltekern, auf dem das Einlegeteil angeordnet ist, und besteht aus natürlichem oder synthetischem Kautschuk (Gummi) oder allgemein aus einem oder mehreren Elastomeren oder Kunststoffen oder aus einer Kombination dieser Materialien.

Gemäß einem Beispiel ist das Dichtelement ein vom Haltekern und vom Einlegeteil getrenntes Element, welches auf dem Haltekern angeordnet wird. Zur Befestigung dieses separaten Dichtelements wird beispielsweise der Haltekern mit aufgeschraubtem oder aufgestecktem Einlegeteil in eine Öffnung in der Innenwand des Formhohlraums gesteckt. Vor dem Befestigen des Haltekerns wird das Dichtelement zwischen der Innenwand und dem Einlegeteil angeordnet und dementsprechend in dieser Position festgeklemmt. Es ist ebenfalls möglich, das Einlegeteil auf einem fest im Formhohlraum angeordneten Haltekern anzuordnen. Bevor das Einlegeteil auf dem Haltekern befestigt wird, wird das separate Dichtelement zur Abdichtung zwischen Innenwand und Einlegeteil auf den Haltekern aufgesteckt.

Erfindungsgemäß weist das Einlegeteil stirnseitig und angrenzend an die Wand der Gussform einen umlaufenden flexiblen

Kragen auf, der das Dichtelement bildet. Das Einlegeteil, beispielsweise ein eng gewickelter oder ein auf Block gewickelter Drahtgewindeeinsatz, ist in seinem axialen Hohlraum erfindungsgemäß durch eine Kunststoffbeschichtung radial auswärts abgedichtet. Die Kunststoffbeschichtung des Inneren des Einlegeteils wird vorzugsweise bis zu einer Stirnseite des Einlegeteils ausgedehnt, um dort einen umlaufenden und die Stirnseite des Einlegeteils abdeckenden Kragen auszubilden. Es ist ebenfalls bevorzugt, den Kragen getrennt von der Kunststoffbeschichtung an der Stirnseite des Einlegeteils bzw. Drahtgewindeeinsatzes anzuformen. Dieser Kragen besitzt die gleiche Funktion wie der ebenfalls beschrieben Dichtring oder die Dichtscheibe. Sobald das Einlegeteil auf einem Haltekern angeordnet ist, ist dieser umlaufende Kragen, der aus einem vorzugsweise flexiblen Dichtmaterial besteht, an der Grenzfläche zwischen Innenwand des Formhohlraums und dem Einlegeteil angeordnet. Diese Konstruktion des Einlegeteils hat den Vorteil, dass das Einlegeteil mit Dichtelement als eine Einheit vorliegt, und daher nicht mehrere Einzelteile in der Gussform positioniert werden müssen. Die im Inneren des Einlegeteils angeordnete Kunststoffbeschichtung umfasst gemäß einer Ausführungsform vorliegender Erfindung eine geringere Flexibilität oder Shore-Härte als der Kragen, da dadurch eine ausreichende innere Abdichtung gewährleistet werden kann. In diesem Fall wird das Einlegeteil durch eine Kunststoffkombination mit Kunststoffen unterschiedlicher Flexibilität am Kragen und im Inneren des Einlegeteils gebildet. Es ist ebenfalls bevorzugt, den Kragen und die Kunststoffbeschichtung des Einlegeteils durch nur einen Kunststoff zu bilden. In diesem Fall ist vorzugsweise der Anpressdruck zwischen Einlegeteil und Innenwand der Form und/oder die Konstruktion der Innenwand der Form im angrenzenden Bereich zwischen Forminnenwand und Einlegeteil an die Materialeigenschaften des Kunststoffs, bspw. Seine Flexibilität bzw. Shore-Härte, angepasst.

Wie bereits oben erwähnt worden ist, ist es vorteilhaft, den in der Gussform angeordneten mindestens einen Haltekern zumindest teilweise konisch oder zylindrisch geformt auszubilden. Ebenso ist es möglich, dass der mindestens eine Haltekern ein Außengewinde aufweist. In weiterer Ausgestaltung des Haltekerns wird dieser durch einen zylindrisch geformten Stift gebildet, der in den Formhohlraum ragt und der entlang einer Längsachse des Haltekerns aus dem Formhohlraum bewegbar, insbesondere verschiebbar, ist. In einer weiteren

Ausgestaltung weist der als zylindrisch geformte Stift ausgebildete Haltekern ein Gewinde auf, wobei er ebenfalls in den Formhohlraum ragt und entlang seiner Längsachse aus dem Formhohlraum bewegbar, insbesondere herausschraubbar, ist. Bei den obigen Beispielen wird der Haltekern derart aus dem Formhohlraum bewegt, dass sich seine in den Formhohlraum ragende Länge sukzessive verkürzt, bis er nicht mehr in den Formhohlraum ragt. Wie bereits oben erläutert worden ist, sind die Haltekerne zur Befestigung des Einlegeteils im Formhohlraum unterschiedlich ausgebildet. Wird der Gewindeeinsatz als Einlegeteil auf dem Haltekern platziert, so ist dies in gleicher Weise durch Aufstecken auf einen insbesondere zylindrisch geformten Stift ohne Gewinde sowie durch Aufschrauben auf einen insbesondere zylindrisch geformten Stift mit Gewinde möglich. Diese unterschiedlich aufgebauten Haltekerne geben dem Einlegeteil ausreichende Stabilität und Positionssicherheit, während die Materialschmelze in den Formhohlraum eingebracht wird. Während des nachfolgenden Abkühlens der Materialschmelze treten Schwindungsvorgänge in dem Gussbauteil auf, die sowohl isotrop als auch anisotrop im Gussbauteil verteilt sein können. Um kritischen mechanischen Spannungszuständen aufgrund der Schwindungsprozesse im Gussbauteil entgegenzuwirken, sind die Haltekerne trotz ihrer unterschiedlichen Konstruktion noch während des Abkühlvorgangs und insbesondere noch vor dem Entformen des Gussbauteils aus dem Formhohlraum und somit aus dem Inneren des Einlegeteils entfernbar. Zu diesem Zweck wird der jeweils genutzte Haltekern aus dem Einlegeteil bewegt. Diese Bewegung erfolgt insbesondere durch ein Versetzen des Haltekerns in seiner axialen Längsrichtung. Entsprechend wird der Haltekern insbesondere aus dem Einlegeteil herausgezogen oder bei Vorhandensein eines Gewindes auf dem Haltekern aus dem Einlegeteil und dem Formhohlraum herausgeschraubt. Zudem wird der Haltekern unabhängig von seiner Konfiguration durch eine Öffnung in der Wand der Gießform von außen in den Formhohlraum bewegt. Dort wird er insbesondere durch Arretierung in der Wand der Gießform fixiert, um das auf dem Haltekern positionierte Einlegeteil positionstreu zu halten. Alternativ dazu wird der Haltekern von der Innenseite des Formhohlraums in eine dafür vorgesehene Öffnung in der Innenwand des Formhohlraums gesteckt oder eingeschraubt und dort fixiert.

Weiterhin verbleibt der Haltekern insbesondere solange im Formhohlraum, bis das Gussteil vollständig entformt worden ist. Bei dieser Vorgehensweise muss die Längsachse der Haltekerne im Formhohlraum parallel zur Bewegungsrichtung der Formhälften oder der Formteile beim Öffnen des Formhohlraums ausgerichtet sein, um ein problemloses Öffnen der Form zu gewährleisten. Genauso muss die Längsachse des Haltekerns 40 parallel zur Auszugsrichtung des Gussteils angeordnet sein.

Es ist weiterhin möglich, unabhängig von der Konfiguration des Haltekerns den Haltekern derart anzuordnen, dass er durch die umgebende Wand des Formhohlraums aus dem Formhohlraum heraus bewegbar ist. Diese Bewegung erfolgt insbesondere durch Ziehen oder Drehen des Haltekerns. Auf dieser Grundlage ist jeder Haltekern beliebiger Konfiguration aus dem Formhohlraum und dem dort befindlichen Gussteil noch vor dem Entformen des Gussteils entfernbar. Dies hat den Vorteil, dass ein Haltekern nicht Schwindungsprozesse im Material des Gussteils behindert. Ein weiterer Vorteil besteht darin, dass die Formhälften oder Formteile der Gießform zum Entformen des Gussteils in beliebigen Richtungen bewegt werden können, ohne dass eine Abstimmung mit der Orientierung der Längsachse des Haltekerns im Gussteil erforderlich ist. Daraus folgt, dass mithilfe eines aus dem Formhohlraum entfernbaren Haltekerns vor dem Entformen des Gussteils Einlegeteile in beliebiger räumlicher Orientierung im Formhohlraum und im Gussteil anordenbar sind, weil zum Entformen des Gussteils aus dem Formhohlraum der Haltekern bereits aus dem Gussteil und dem Formhohlraum entfernt worden ist.

Gemäß einem weiteren Beispiel ist der Haltekern ein zylindrisch geformter Stift aus Kunststoff, wobei der Kunststoff eine annähernd wärmeunabhängige Festigkeit aufweist. Die insbesondere auf den Gussprozess und die dort auftretenden Wärmemengen abgestimmte Materialwahl des Haltekerns aus Kunststoff soll sicherstellen, dass der Haltekern trotz einer Erwärmung bis zu annähernd der Schmelztemperatur des Gussmaterials seine Stabilität beibehält. Dies gewährleistet, dass der Haltekern aus Kunststoff das Einlegeteil positionssicher im Formhohlraum hält.

Gemäß einem weiteren Beispiel ist der Haltekern für das Einlegeteil ein zylindrisch geformter Stift aus Kunststoff, wobei der Kunststoff eine wärmeabhängige Festigkeit aufweist, die mit zunehmender thermischer Belastung abnimmt.

Bezugnehmend auf die hier beschriebene Materialwahl des Haltekerns aus Kunststoff wird berücksichtigt, dass während des Abkühlens des Gussbauteils im Formhohlraum Schwindungsprozesse ablaufen. Diese können zu Verformungsvorgängen führen, die der starren Positionierung eines Einlegeteils auf einem Haltekern im Formhohlraum entgegenwirken. Um hier in einem akzeptablen Toleranzbereich eine ausgleichende bzw. mechanisch entlastende Bewegungsmöglichkeit des Einlegeteils auf dem Haltekern im Verhältnis zu den auftretenden Schwindungsprozessen zu gewährleisten, ist der Kunststoff des Haltekerns mit zunehmender Erwärmung mit einer gesteigerten Bewegbarkeit bzw. Flexibilität oder reduzierten Festigkeit im Vergleich zu einer Festigkeit bei Raumtemperatur ausgestattet. Auf Grundlage dieser Materialwahl folgt der Haltekern und somit das Einlegeteil in gewissen Grenzen den im Material stattfindenden Schwindungsprozessen, ohne das versagensrelevante mechanische Spannungszustände im Gussbauteil dadurch erzeugt werden, dass der Haltekern starr an seiner Position im Formhohlraum bleibt. Mit dieser Materialwahl des Haltekerns aus Kunststoff ist aber gleichzeitig sichergestellt, dass trotz einer reduzierten Festigkeit des Kunststoffs aufgrund der Erwärmung des Haltekerns im frisch gegossenen Gussbauteil eine positionsstabile Befestigung des Einlegeteils im Gussbauteil und im Formhohlraum erfolgt.

Gemäß einem weiteren Beispiel weist der Haltekern mindestens eine Sollbruchstelle auf, die ein Versagen des Haltekerns quer zu einer Längsrichtung des Haltekerns gewährleistet. Die hier beschriebene mögliche Konstruktion des Haltekerns berücksichtigt ebenfalls im abkühlenden Gussmaterial auftretende Schwindungsprozesse, sodass versagensrelevante mechanische Spannungszustände im Gussbauteil vermieden werden. Unter versagensrelevanten mechanischen Spannungszuständen werden jegliche mechanische Spannungszustände verstanden, die das Gussbauteil selbst sowie ein im Gussbauteil angeordnetes Einlegeteil verformen, beschädigen oder sogar zerstören können. Wie bereits oben im Hinblick auf die Schwindungsvorgänge erläutert worden ist, können diese zu einer Positionsveränderung des Einlegeteils im Vergleich zur Position auf dem Haltekern innerhalb des Formhohlraums führen. Um für diese Schwindungsprozesse eine ausreichende Bewegungsfreiheit dem Einlegeteil zur Verfügung zu stellen, ist der Haltekern mit einer bevorzugten Sollbruchstelle ausgestattet. Finden daher Schwindungsprozesse statt, die den Haltekern schräg oder quer zu seiner Längsachse belasten, dann versagt der Haltekern an der vorgesehenen Sollbruchstelle, sobald eine mechanische Schwellenbelastung überschritten wird. Dieses Versagen an der Sollbruchstelle gewährleistet, dass den Schwindungsprozessen im Gussbauteil durch den Haltekern reduzierte Kräfte entgegengesetzt werden, da der Haltekern aus Kunststoff nun durch die gebrochene Sollbruchstelle den Schwindungsvorgängen in einem gewissen Toleranzbereich folgen kann. Daher sorgt auch diese mögliche Ausgestaltung des Haltekerns aus Kunststoff mit Sollbruchstelle dafür, dass ein Gussbauteil mit ausreichend genau positioniertem Einlegeteil herstellbar ist, wobei gleichzeitig die Wahrscheinlichkeit von mechanischen Beschädigungen des Gussbauteils während eines Abkühlungsprozesses reduziert werden.

Gemäß einer weiteren Möglichkeit ist der Haltekern ein zylindrisch oder konisch geformter Stift, der in den Formhohlraum ragt und der eine Kunststoffhülse aufweist, wobei der Kunststoff eine annähernd wärmeunabhängige Festigkeit oder eine wärmeabhängige Festigkeit umfasst, die mit zunehmender thermischer Belastung abnimmt.

In gleicher Weise, wie ein Haltekern aus Kunststoff eingesetzt werden kann, ist es möglich, einen zylindrisch oder konisch geformten Stift als Haltekern zu verwenden, der eine Kunststoffhülse als Verbindungselement zum aufgesteckten oder aufgeschraubten Einlegeteil aufweist. Diese Kunststoffhülse weist aufgrund der Materialgestaltungen des verwendeten Kunstoffs die gleichen Eigenschaften auf, wie sie oben in Kombination mit dem Haltekern aus Kunststoff beschrieben worden sind. Hier wird aber insbesondere die Bereitstellung eines Hybridhaltekerns benutzt, der aus einem formstabilen inneren Stift, insbesondere aus Metall, Keramik oder einem Kunststoff, und der darauf angeordneten Kunststoffhülse besteht. Während die Kunststoffhülse ein an die auftretenden Wärmemengen angepasstes Festigkeitsverhalten aufweist (siehe oben), gewährleistet der verwendete Stift die Positionsstabilität des Einlegeteils im Formhohlraum. Daraus folgt, dass die Grundposition des Einlegeteils im Formhohlraum und im späteren Gussbauteil durch den Stift realisiert wird. Die Kunststoffhülse, die übrigens auf dem Stift und/oder an der Innenseite des Einlegeteils realisiert sein kann, gewährleistet eine Bewegbarkeit des Einlegeteils um die Grundposition herum. Somit gewährleistet die Kunststoffschicht basierend auf den Materialeigenschaften des Kunststoffs einen spannungsabbauenden Bewegungsspielraum für das Einlegeteil im abkühlenden Gussbauteil.

Ebenfalls in Anlehnung an die bereits oben beschriebenen Beispiele ist es weiterhin möglich, dass der Haltekern als ein zylindrisch oder konisch geformter Stift ausgebildet ist, der in den Formhohlraum ragt und der eine Kunststoffhülse mit mindestens einer Sollbruchstelle aufweist, die ein Versagen der Kunststoffhülse quer zu einer Längsrichtung der Kunststoffhülse gewährleistet. Die hier beschriebene Kunststoffhülse mit mindestens einer Sollbruchstelle hat die gleichen Eigenschaften wie der oben beschriebene Haltekern aus Kunststoff mit Sollbruchstelle. Das Versagen aufgrund des Vorhandenseins der Sollbruchstelle beschränkt sich hier aber auf die Kunststoffhülse, da der stabilisierende innere zylindrisch oder konisch geformte Stift trotz Versagen der Sollbruchstelle seine Position und Stabilität beibehält. Aber auch mit dieser Ausgestaltung des Haltekerns sind Schwindungsvorgänge im Gussbauteil soweit ausgleichbar, dass keine beschädigenden mechanischen Spannungszustände am Einlegeteil und/oder am Gussbauteil auftreten. Zudem ist gewährleistet, dass das Gussbauteil sich noch vor dem Entformen in seine angestrebte Form und Dimension entwickeln kann, ohne dass sich im Formhohlraum befindliche Haltekerne behindernd auf diese Materialschwindungsvorgänge auswirken.

Vorliegende Erfindung umfasst ein Einlegeteil, das in ein Metallgussteil oder ein Kunststoffspritzgussteil einformbar ist. Dieses erfindungsgemäße Einlegeteil, das ein Drahtgewindeeinsatz ist, weist die folgenden Merkmale auf: eine zumindest teilweise durchbrochene Außenwand und einen inneren Hohlraum, wobei eine gewickelte Drahtwendel des Drahtgewindeeinsatzes radiale Zwischenräume aufweist und der Drahtgewindeeinsatz an seinen gegenüberliegenden Stirnseiten jeweils eine Öffnung umfasst, eine Innenwand des inneren Hohlraums ist mit Kunststoff beschichtet und der Drahtgewindeeinsatz weist einseitig stirnseitig einen Kunststoffkragen auf, der geeignet ausgebildet ist, um in Wirkverbindung mit einer Wand einer Gussform ein Dichtelement gegen Metallschmelze oder Kunststoffschmelze zu bilden, sodass der innere Hohlraum gegen ein Eindringen von Metallschmelze oder Kunststoff von außen an den Stirnseiten und an der Umfangsseite abgedichtet ist. Es ist beispielsweise von Vorteil, an der der Innenwand der Gussform abgewandten Stirnseite des Einlegeteils oder Drahtgewindeeinsatzes ein teilweises Eindringen von Materialschmelze zu gestatten. Dadurch verankert sich das Einlegeteil im erstarrten Material, ohne die Funktionalität des Einlegeteils zu beeinträchtigen. Derartige Einlegeteile stellen beispielsweise Gewindeeinsätze oder Verbindungseinsätze dar, mit denen später durch ein passendes Verbindungselement, wie ein Gewindebolzen, eine Verbindung im Gussteil herstellbar ist.

Diese Einlegeteile zeichnen sich aufgrund der gewickelten Drahtwendel durch radiale Zwischenräume aus. Des Weiteren umfasst ein Drahtgewindeeinsatz an seinen gegenüberliegenden Stirnseiten jeweils eine Öffnung, durch die ebenfalls Materialschmelze in das Innere des Drahtgewindeeinsatzes eindringen kann. Das Gleiche gilt für andere Gewindeeinsätze, beispielsweise ein hülsenförmiger Gewindeeinsatz aus Messing mit einem Innengewinde, der zumindest zwei gegenüberliegende stirnseitige Öffnungen umfasst. Ebenfalls denkbar ist eine Kupplung eines Bajonettverschlusses, die entsprechende Öffnungen in der radialen Außenwand aufweisen kann, durch die Materialschmelze während eines Gussverfahrens eindringen könnte.

Um den inneren Hohlraum des Einlegeteils von innen gegen das Eindringen von Materialschmelze von außen abzudichten, wird die Innenseite des Hohlraums des Einlegeteils mit einer Kunststoffschicht versehen. Der Kunststoff schließt Spalte und Zwischenräume, sodass Materialschmelze nicht durch die radiale Außenwand in den inneren Hohlraum des Einlegeteils eindringen kann.

Erfindungsgemäß ist einseitig stirnseitig ein angeformter Kunststoffkragen am Einlegeteil vorgesehen, der in Wirkverbindung mit einer Wand einer Gussform, insbesondere einer Gussform gemäß einer der oben beschrieben Beispiele, ein Dichtelement gegen Metallschmelze oder Kunststoffschmelze bildet. Dieser als Dichtelement ausgebildete Kunststoffkragen weist vorzugsweise eine unterschiedliche radiale Ausdehnung auf. Gemäß einer Ausführungsform erstreckt sich der Kunststoffkragen in radialer Richtung bis zum oder über den äußeren Umfang des Einlegeteils hinaus. Gemäß einer weiteren bevorzugten Ausführungsform ist der Kunststoffkragen ringförmig ausgebildet und legt sich vorzugsweise mit seiner inneren Öffnung an einen Haltekern an.

Gemäß einer weiteren bevorzugten Ausführungsform des erfindungsgemäßen Einlegeteils ist dessen innerer Hohlraum vollständig mit Kunststoff gefüllt, wobei sich der ausgeformte Kunststoff stiftartig und einseitig über das Einlegeteil hinaus erstreckt. Auf diese Weise wird funktionell der abdichtende Kunststoff im Inneren des Einlegeteils derart gestaltet, dass er ebenfalls einen in der Gussform positionierbaren Haltekern bildet. Während der Haltekern eine ausreichende Stabilität während des Gussverfahrens aufweist, ist er rückstandslos aus dem Einlegeteil entfernbar, nachdem das Gussverfahren abgeschlossen ist.

Es ist des Weiteren bevorzugt, den inneren Hohlraum des Einlegeteils nur teilweise mit Kunststoff auszufüllen. Im Rahmen dieser Kunststofffüllung des inneren Hohlraums des Einlegeteils wird ein zylindrisch und/oder konisch geformter Innenraum ausgebildet, in dem ein Haltekern komplementärer Ausgestaltung oder ähnlicher Ausgestaltung aufnehmbar ist. Auf diese Weise ist das Einlegeteil sicher auf einem Haltekern positionierbar, während gleichzeitig der Haltekern die Kunststofffüllung des Einlegeteils radial nach außen drückt.

Dieser radiale Druck auswärts unterstützt die abdichtende Funktion gegen das Eindringen von Material schmelze.

Gemäß einer bevorzugten Ausführungsform vorliegender Erfindung ist das erfindungsgemäße Einlegeteil ein gewickelter Drahtgewindeeinsatz, vorzugsweise ein auf Block gewickelter Drahtgewindeeinsatz.

Im Hinblick auf das erfindungsgemäße Einlegeteil ist es weiterhin bevorzugt, dass eine ein Inneres des Einlegeteils auskleidende Kunststoffhülse vorgesehen ist, wobei der Kunststoff der Kunststoffhülse eine annähernd wärmeunabhängige Festigkeit oder eine wärmeabhängige Festigkeit aufweist, die mit zunehmender thermischer Belastung abnimmt. Zudem ist es erfindungsgemäß bevorzugt, dass eine ein Inneres des Einlegeteils auskleidende Kunststoffhülse mit mindestens einer Sollbruchstelle versehen ist, die ein Versagen der Kunststoffhülse quer zu einer Längsrichtung der Kunststoffhülse gewährleistet.

Die hier beschriebene auskleidende Kunststoffhülse des Einlegeteils weist im Hinblick auf ihre Materialgestaltung die gleichen Eigenschaften auf, wie sie oben im Zusammenhang mit dem Haltekern aus Kunststoff sowie mit der Kunststoffhülse auf dem zylindrisch oder konisch geformten Haltekern beschrieben worden sind. Im Unterschied zu der Kunststoffhülse auf dem zylindrisch oder konisch geformten Haltekern ist hier die Kunststoffhülse nicht auf dem Haltekern sondern direkt im Inneren des Einlegeteils angeordnet. Da aber auch die Kunststoffhülse im Inneren des Einlegeteils die gleichen Funktionen erfüllt wie eine Kunststoffhülse auf dem zylindrisch oder konisch geformten Haltekern, gelten die entsprechenden Ausgestaltungen des Kunststoffmaterials und die Ausgestaltung und Anordnung der mindestens einen Sollbruchstelle hier in gleicher Weise.

Vorliegende Beschreibung erläutert zudem ein Gussvorbereitungsverfahren, mit dem ein Einlegeteil einer Gussform, d.h. einer Metallgussform oder einer Kunststoffspritzgussform, an ein entsprechendes Metallgussverfahren oder ein Kunststoffspritzgussverfahren angepasst wird. Das Gussvorbereitungsverfahren bereitet das Einlegeteil dahingehend vor, dass beim Gießen einer Metallschmelze oder Kunststoffschmelze in die entsprechende Gussform ein Eindringen von Kunststoff- oder Metallschmelze in das Einlegeteil während des Gussverfahrens zumindest teilweise verhindert ist. Eine derartige Vorbereitung des Einlegeteils reduziert die Taktzeiten eines Gussverfahrens. Das Gussvorbereitungsverfahren weist die folgenden Schritte auf: zumindest teilweise Ausspritzen eines inneren

Hohlraums des Einlegeteils mit abdichtendem Kunststoff und vorsehen eines einseitig stirnseitig und umlaufenden Kragens am Einlegeteil, der ein Dichtelement zu einer Wand einer Gussform bildet.

Wie oben bereits angedeutet worden ist, sind verschiedene Einlegeteile für Metallgussteile oder Kunststoffspritzgussteile bekannt, die eine zumindest teilweise durchbrochene Außenwand aufweisen. Betrachtet man in diesem Zusammenhang beispielsweise einen Drahtgewindeeinsatz, dann weist dieser an seiner radialen Außenseite in Abhängigkeit von seiner Konstruktion mehr oder weniger große Abstände zwischen benachbarten Windungen auf. Des Weiteren sind an den axialen Stirnseiten des Drahtgewindeeinsatzes Öffnungen vorhanden, um beispielsweise zumindest von einer Seite in den im Gussteil installierten Drahtgewindeeinsatz einen Gewindebolzen einschrauben zu können. Somit weisen die radialen Außenseiten und die Stirnseiten des Drahtgewindeeinsatzes, die hier als Außenwand betrachtet werden, zumindest teilweise Durchbrüche auf, die gegen das Eindringen von Materialschmelze beim späteren Gussverfahren zumindest teilweise, vorzugsweise vollständig, abgedichtet werden müssen. Denn nur dadurch kann vermieden werden, dass Kunststoff- oder Metallschmelze in das Innere des Einlegeteils, beispielsweise eine Gewindehülse, ein Drahtgewindeeinsatz oder auch eine Verstärkungshülse für eine spätere Durchgangsöffnung, eindringt und dadurch die spätere Funktion des Einlegeteils blockiert.

Zur Vorbereitung des Einlegeteils auf das Gussverfahren wird der innere Hohlraum des Einlegeteils durch eine Kunststoffbeschichtung an der Innenwand des Einlegeteils abgedichtet. Diese Kunststoffbeschichtung füllt Hohlräume und Spalte abdichtend aus, sodass Verbindungen zwischen dem inneren Hohlraum und der Umgebung des Einlegeteils durch die Außenwand unterbrochen sind. Diese Kunststoffbeschichtung wird gemäß einem Beispiel durch eine dünne Schicht gebildet, indem beispielsweise der innere Hohlraum mit dem abdichtenden Kunststoff ausgespritzt wird. Gemäß einem weiteren Beispiel wird der innere Hohlraum des Einlegeteils vollständig mit Kunststoff ausgespritzt, sodass kein innerer Hohlraum mehr im Einlegeteil vorliegt. Während das Aufbringen der abdichtenden Kunststoffschicht an der Innenwand des Hohlraums des Einlegeteils die möglichen stirnseitigen Öffnungen des Einlegeteils immer noch offen lässt, sorgt ein vollständiges Füllen des Innenraums des Einlegeteils für eine vollständige Abdichtung der gesamten möglicherweise durchbrochenen Außenwand des Einlegeteils. Aber auch im Zusammenhang mit der Kunststoffbeschichtung ist es bevorzugt, zumindest eine stirnseitige Öffnung des Einlegeteils durch eine Kunststoffwand zu verschließen.

Im Zusammenhang mit dem Gussvorbereitungsverfahren ist es weiterhin möglich, dass der innere Hohlraum des Einlegeteils vollständig und derart ausgespritzt wird, dass ein Kunststoffhaltekern gebildet wird, der sich stirnseitig über das Einlegeteil hinaus erstreckt, wobei der Kunststoff eine annähernd wärmeunabhängige Festigkeit aufweist oder wobei der Kunststoff eine wärmeabhängige Festigkeit aufweist, die mit zunehmender thermischer Belastung abnimmt, und/oder wobei der Kunststoffhaltekern mindestens eine Sollbruchstelle aufweist, die ein Versagen des Haltekerns quer zu einer Längsrichtung des Halterkerns gewährleistet. In diesem Zusammenhang ist es ebenfalls möglich, dass das Innere des Hohlraums des Einlegeteils derart ausgespritzt wird, dass ein zumindest teilweise zylindrisch und/oder konisch geformter Aufnahmeraum für den Haltekern entsteht, wobei der Kunststoff eine annähernd wärmeunabhängige Festigkeit aufweist oder wobei der Kunststoff eine wärmeabhängige Festigkeit aufweist, die mit zunehmender thermischer Belastung abnimmt, und/oder wobei der Kunststoff im Inneren des Einlegeteils mindestens eine Sollbruchstelle aufweist, die ein Versagen des Kunststoffs im Hohlraum des Einlegeteils quer zu einer Längsrichtung des Haltekerns gewährleistet.

Der für den Haltekern verwendete Kunststoff sowie der für ein Ausspritzen des inneren Hohlraums des Einlegeteils verwendete Kunststoff sind in gleicher Weise ausgestaltet, wie es oben bereits beschrieben worden ist. Insbesondere werden beispielsweise die Materialeigenschaften des verwendeten Kunststoffs auf unterschiedliche Weise an die während des Herstellungsverfahrens des Gussteils im Gussteil vorhandene Wärme und auftretenden Materialschwindungsvorgängen angepasst. Dementsprechend ist es für verschiedene Gussbauteile bevorzugt, dass der verwendete Kunststoff seine Festigkeit trotz variierender Wärmeeinflüsse beibehält. In gleicher Weise ist es bei anderen Gussbauteilen bevorzugt, dass der Kunststoff mit zunehmender Erwärmung seine Festigkeit verringert und dann wieder mit zunehmender Abkühlung seine Festigkeit steigert. Mithilfe dieser Materialgestaltung wird auf Materialschwindungsvorgänge im Gussbauteil nach dem Füllen des Formhohlraums eingegangen, sodass diese Materialschwindungsvorgänge nicht zu einer Schädigung des Gussbauteils führen. In gleicher Weise ist es möglich, ein gezieltes Versagen des Kunststoffhaltekerns oder des teilweise mit Kunststoff ausgespritzten Inneren des Einlegeteils mithilfe der Sollbruchstelle im Kunststoff zu erzielen. Dieses gezielte Versagen mithilfe der verwendeten Sollbruchstelle gewährleistet ebenfalls die Vermeidung von kritischen mechanischen Spannungszuständen im Gussbauteil. Zusammenfassend werden demnach durch das Nachgeben des Kunststoffs sowie durch ein gezieltes Versagen des Kunststoffs Ausgleichsräume im Gussbauteil geschaffen, die unterschiedlich starke Schwindungsvorgänge im Gussbauteil im Vergleich zu der das Gussbauteil umgebenden Form ausgleichen. Dadurch ist es möglich, dass Gussbauteil im Formhohlraum noch vor dem Entformen mechanisch zu entlasten, während das Gussbauteil und die Form abkühlen.

Weitere Ausgestaltungen sehen vor, dass die innere abdichtende Kunststoffbeschichtung oder Kunststofffüllung im Drahtgewindeeinsatz mit einem einseitig und stirnseitig umlaufend angeordneten Kragen kombiniert wird. Dieser Kragen bildet ein mit der Kunststofffüllung oder Kunststoffbeschichtung zusammenhängendes Teil oder er ist separat von dieser Kunststofffüllung oder Kunststoffbeschichtung an der Stirnseite des Drahtgewindeeinsatzes oder allgemein des Einlegeteils angeformt.

Gemäß einem weiteren Beispiel wird gleichzeitig mit dem vollständigen Füllen des inneren Hohlraums des Einlegeteils ein Kunststoffhaltekern ausgeformt, der sich aus dem inneren Hohlraum zumindest einseitig stirnseitig über das Einlegeteil hinaus erstreckt. Dieser Haltekern ist in einer Gussform befestigbar, sodass das Einlegeteil angrenzend an die Innenwand eines Formhohlraums einer Metallguss- oder einer Kunststoffspritzgussform angeordnet ist.

Um ergänzend zur abdichtenden Wirkung der Kunststoffbeschichtung oder Kunststofffüllung im inneren Hohlraum des Einlegeteils eine Abdichtung an zumindest einer der stirnseitigen Flächen des Einlegeteils zu realisieren, weist das Einlegeteil ergänzend zur Kunststoffbeschichtung oder Kunststofffüllung einen zumindest einseitig stirnseitig angeordneten umlaufenden Kunststoffkragen auf. Dieser Kunststoffkragen ist beispielsweise ringförmig oder scheibenförmig mit mittigem Durchbruch ausgebildet und deckt zumindest teilweise eine Stirnseite des Einlegeteils ab. Sobald das Einlegeteil in einer Metallgussform angeordnet wird, sorgt dieser stirnseitige Kragen für eine Abdichtung des Einlegteils gegen ein stirnseitiges Eindringen von Materialschmelze. Denn der Kragen wird zwischen dem Einlegeteil und einer Innenwand des Formhohlraums der Metallgussform oder der Kunststoffspritzgussform eingeklemmt, sodass durch das flexible oder kompressible oder verformbare Material des Kragens Spalte und Hohlräume an der Grenzfläche zwischen der

Innenwand des Formhohlraums und dem Einlegeteil verschlossen werden. Dieser Kragen ist beispielsweise sowohl mit einer abdichtenden Kunststoffbeschichtung im Innenraum des Einlegeteils sowie mit einer vollständigen Kunststofffüllung beispielsweise in Form eines Haltekerns, des Einlegeteils kombinierbar.

Gemäß einem weiteren Beispiel wird ein innerer Hohlraum des Einlegeteils derart ausgespritzt, dass ein zumindest teilweise zylindrisch und/oder konisch geformter Aufnahmeraum für einen Haltekern entsteht. Ist beispielsweise ein in die Gussform einsteckbarer oder dort permanent installierter Haltekern vorgesehen, dann wird insbesondere die Form des Hohlraums der inneren abdichtenden Kunststofffüllung des Einlegeteils an die äußere Gestalt des Haltekerns angepasst. Eine derartige Formanpassung des Innenraums der Kunststofffüllung des Einlegeteils sorgt für einen festen Halt und eine Positionsstabilität des Einlegeteils während des Gussverfahrens. Gemäß einem Beispiel ist der Hohlraum in der Kunststofffüllung des Einlegeteils zumindest teilweise komplementär zur äußeren Formgestaltung des Haltekerns ausgebildet. Gemäß einem anderen Beispiel ist dieser Hohlraum im Einlegeteil untermaßig im Vergleich zu den äußeren Dimensionen des Haltekerns ausgebildet, sodass nach Aufstecken des Einlegeteils auf den Haltekern dieses Einlegeteil dort durch einen Presssitz gehalten wird. In gleicher Weise sorgt ein konisch geformter Innenraum des Einlegteils dafür, dass das Einlegeteil auf einem ebenfalls konisch geformten Haltekern durch Presssitz befestigt werden kann. Neben einer stabilen Befestigung sorgt ein derartiger Presssitz dafür, dass die innere Kunststoffbeschichtung des Einlegeteils radial nach außen gedrückt wird. Auf diese Weise wird die abdichtende Funktion der inneren Kunststofffüllung des Einlegeteils unterstützt.

Gemäß einem weiteren Beispiel wird das Einlegeteil auf einen Haltekern mit Außengewinde aufgeschraubt oder auf einen Haltekern ohne Außengewinde aufgesteckt. Gemäß eines weiteren möglichen Schritts des Gussvorbereitungsverfahrens wird der einseitig stirnseitig umlaufende Kragen an einer Seite des Einlegeteils angespritzt.

Vorliegende Erfindung offenbart ebenfalls ein Metallgussverfahren oder ein Kunststoffspritzgussverfahren, mit dem mindestens ein Einlegeteil in einem Metallgussteil oder einem Kunststoffspritzgussteil befestigbar ist. Zusammenfassend werden das Metallgussverfahren und das Kunststoffspritzgussverfahren als Gussverfahren bezeichnet. Dieses Gussverfahren weist die folgenden Schritte auf: Bereitstellen einer Gussform, vorzugsweise eine Gussform gemäß den oben beschriebenen Beispielen, mit einem Formhohlraum, Bereitstellen eines erfindungsgemäßen Einlegeteils, Positionieren des mindestens einen Einlegeteils innerhalb des Formhohlraums mithilfe einer Positioniervorrichtung, Anordnen des durch den Kunststoffkragen gebildeten Dichtelements zwischen der Stirnseite des Drahtgewindeeinsatzes und einer Innenwand des Formhohlraums, mit dem das Einlegeteil zumindest teilweise gegen ein Eindringen von Metall- oder Kunststoffschmelze abdichtbar ist, Ausgießen des Formhohlraums mit einer Metall- oder Kunststoffschmelze und Entformen des Gussteils.

Im Rahmen des Metallgussverfahrens oder des Kunststoffspritzgussverfahrens wird das eingesetzte Dichtelement zwischen dem Einlegeteil und der Innenwand des Formhohlraums durch einen an das Einlegeteil angeformten Kragen gebildet. Durch das Anordnen des Einlegeteils in Kombination mit diesem Dichtelement wird das Dichtelement zwischen der Stirnseite des Einlegeteils und der Innenwand des Formhohlraums zumindest so weit komprimiert, dass das Dichtelement seine abdichtende Wirkung an der Grenzfläche zwischen dem Einlegeteil und der Innenwand des Formhohlraums entfaltet. Zur Positionierung des Einlegeteils im Formhohlraum dient ein einsteckbarer Haltekern oder ein fest installierter Haltekern, wie er in seinen unterschiedlichen Ausgestaltungen bereits oben erwähnt worden ist. So weist der Haltekern vorzugsweise ein Gewinde zum Aufschrauben des Einlegeteils oder eine zylindrische oder konische Form auf, auf die das Einlegeteil aufgesteckt werden kann.

Sollte die Gussform keine permanent installierte Positioniervorrichtung aufweisen, ist esbevorzugt, dass eine Positioniervorrichtung aus einem Haltekern aus Metall oder Kunststoff oder Keramik vorgesehen wird, die in einer Öffnung der Innenwand des Formhohlraums lösbar, vorzugsweise gesteckt, oder anderweitig befestigt werden kann. Im Rahmen des Gussverfahrens erfolgt dann vorzugsweise ein Befestigen des Haltekerns mit aufgestecktem oder aufgeschraubtem Einlegeteil mit einseitig stirnseitig umlaufendem Kragen als Dichtelement im Formhohlraum. Alternativ zu der eben beschriebenen bevorzugten Ausführungsform ist es ebenfalls denkbar, dass als Positioniervorrichtung ein permanent an der Innenwand des Formhohlraums befestigter Haltekern aus Metall oder Kunststoff oder Keramik vorgesehen ist. Entsprechend wird im Rahmen des Gussverfahrens das Einlegeteil mit einseitig stirnseitigem umlaufenden Kragen als Dichtelement auf den Haltekern im Formhohlraum aufgesteckt oder aufgeschraubt.

Diese bevorzugten Verfahrensschritte sind von ihrer Funktionalität ähnlich ausgestaltet, wie das Befestigen eines Einlegeteils mit bereits darin angeordnetem Haltekern in einem Formhohlraum. Nur ist hier bereits der Haltekern oder eine andere geeignete Positioniervorrichtung im Formhohlraum permanent installiert, sodass während des Gussverfahrens bzw. kurz vor dem Eingie-ßen der Materialschmelze zunächst das Einlegeteil auf dieser Positioniervorrichtung, beispielsweise einem Haltekern mit oder ohne Gewinde, befestig werden muss.

Gemäß einer weiteren bevorzugten Ausführungsform des erfindungsgemäßen Gussverfahrens besteht die Positioniervorrichtung aus einem Haltekern aus Metall oder Kunststoff oder Keramik, der in der Innenwand des Formhohlraums bewegbar angeordnet ist. Auf dieser Grundlage weist das Gussverfahren vorzugsweise die folgenden Schritte auf: Aufstecken des Einlegeteils auf den Haltekern ohne Gewinde im Formhohlraum oder Aufschrauben des Einlegeteils auf den Haltekern mit Gewinde im Formhohlraum, wobei das Einlegeteil einen einseitigen stirnseitigen umlaufenden Kragen als Dichtelement aufweist. In weiterer bevorzugter Ausgestaltung des Gussverfahrens erfolgt ein Entfernen des Haltekerns mit oder ohne Gewinde aus dem Einlegeteil nach dem Ausgießen des Formhohlraums mit Metall oder Kunststoff und vor dem Entformen des Gussbauteils aus dem Formhohlraum.

Generell ist bei dieser Verfahrensführung vorgesehen, dass nach dem Füllen des Formhohlraums mit Gussmaterial und nach Einsetzen des Erstarrungsprozesses des Gussmaterials der mindestens eine Haltekern aus dem Formhohlraum entfernt wird. Da das Entfernen des mindestens einen Haltekerns noch vor dem Entformen des Gussteils stattfindet, besitzt nun das mindestens eine Einlegeteil des Gussteils eine größere Bewegungsfreiheit während des Abkühlprozesses innerhalb des Formhohlraums. Da der Haltekern stattfindenden Schwindungsvorgängen innerhalb des Gussmaterials nicht entgegenwirkt, bauen sich in diesem Zusammenhang keine versagens- oder verformungsrelevanten mechanischen Spannungen im Gussbauteil auf. Ein weiterer Vorteil besteht darin, dass ein späteres Entformen des Gussbauteils aus dem Formhohlraum nach Entfernen des mindestens einen Haltekerns durchzuführen ist. Denn nachdem mindestens ein Haltekern aus dem Formhohlraum entfernt worden ist, ist es nicht mehr erforderlich, dass beim Entformungsprozess auf die Orientierung des Haltekerns innerhalb des Formhohlraums Rücksicht genommen wird.

Gemäß einer weiteren bevorzugten Ausführungsform vorliegender Erfindung ist das oben beschriebene Gussverfahren ein druckunterstützes Metallgussverfahren, vorzugsweise ein Druckgussverfahren für Aluminium, Magnesium, eine Legierung mit diesen Metallen oder ein anderer ähnlicher Metallwerkstoff.

Vorliegende Beschreibung erläutert zudem ein Gussteil aus Metall oder Kunststoff, insbesondere ein Kunststoffspritzgussteil oder ein Metallgussteil, mit einem integrierten Einlegeteil, insbesondere ein Drahtgewindeeinsatz, dessen Einlegeteil einen von ausgehärteter Materialschmelze zumindest teilweise freien inneren Hohlraum und zumindest einseitig stirnseitig eine Eingangsöffnung ohne ausgehärtete Materialschmelze aufweist. Das Metallgussteil zeichnet sich daher durch die bevorzugte Wirkung der oben beschriebenen abdichtenden Maßnahmen des Einlegeteils vor dem Gussverfahren aus. Denn sowohl das flexible Dichtelement an zumindest einer der Stirnseiten des Einlegeteils sowie die Kunststoffbeschichtung oder Kunststofffüllung im Hohlraum des Einlegeteils bewirken, dass der Innenraum des Einlegeteils und zumindest ein stirnseitiger Eingang in das Einlegeteil von ausgehärteter Materialschmelze freigehalten werden. Dies ist insbesondere bei einem Drahtgewindeeinsatz oder einem anders gearteten Gewindeeinsatz als Einlegeteil relevant, da die ersten Gewindegänge nicht durch ausgehärtete Materialschmelze blockiert werden. Dies ist gerade dann von Bedeutung, wenn das Gussverfahren mit einer niedrigviskosen Materialschmelze oder mit einer unter Druck stehenden Materialschmelze durchgeführt wird, die gerade bei bisher bekannten Gussverfahren in kleinste Spalte und Öffnungen eindringt und dadurch die Funktion von Einlegeteilen zumindest teilweise blockiert oder eine aufwendige Nachbearbeitung erforderlich macht. Insbesondere ist das Gussteil mit dem oben beschriebenen Gussverfahren hergestellt. Während bisher das Erzeugen eines Gussteils mit einseitig zugänglichem Einlegeteil, bspw. ein Drahtgewindeeinsatz, beschrieben worden ist, ist es ebenfalls bevorzugt, in dem beschriebenen Gussverfahren eine Durchgangsöffnung mit einem Einlegeteil auszustatten. In diesem Fall wird das Einlegeteil angrenzend an mindestens zwei Innenwände des Formhohlraums durch jeweils das lose Dichtelement (siehe oben) oder den angeformten Kragen (siehe oben) abgedichtet. Die oben beschriebenen konstruktiven und funktionellen Besonderheiten, die oben im Hinblick auf die einseitige Abdichtung beschrieben worden sind, gelten daher analog auch für die mehrseitige Abdichtung des Einlegeteils.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Figur 1: eine bevorzugte Ausführungsform eines Einlegeteils in Form eines Drahtgewindeeinsatzes,
- Figur 2: eine bevorzugte Ausführungsform eines Einlegeteils vorbereitet für ein Gussverfahren,
- Figur 3: eine schematische Darstellung einer Gussform mit einer Positionieranordnung des Einlegeteils gemäß Fig. 2,
- Figur 4: eine schematische Darstellung einer Gussform mit einer Positionieranordnung einer weiteren bevorzugten Ausführungsform des Einlegeteils,
- Figur 5: eine weitere schematische Darstellung einer Gussform mit einer Positionieranordnung für ein weiter bevorzugtes Einlegeteil,
- Figur 6: eine schematische Darstellung einer Gussform mit einer Positionieranordnung und einer weiteren bevorzugten Ausführungsform des Einlegeteils,
- Figur 7: eine weitere bevorzugte Ausführungsform eines Einlegeteils vorbereitet für ein Gussverfahren,
- Figur 8: eine schematische Darstellung einer weiteren bevorzugten Ausführungsform einer Gussform mit einer Positionieranordnung des Einlegeteils gemäß Fig. 7,
- Figur 9: eine weitere bevorzugte Ausführungsform eines Einlegeteils vorbereitet für ein Gussverfahren,
- Figur 10: eine bevorzugte Ausführungsform eines in einem Formhohlraum mithilfe eines Haltekerns positionierten Einlegeteils,
- Figur 11: eine schematische Darstellung einer bevorzugten Ausführungsform eines mit einem Haltekern in einem Formhohlraum positionierten Einlegeteils unter den Einflüssen des Gussvorgangs,
- Figur 12: einen Haltekern mit Einlegeteil positioniert in einem Formhohlraum,
- Figur 13: eine schematische Darstellung einer Anordnung eines Einlegeteils auf einem Haltekern,
- Figur 14: eine schematische Darstellung einer Gussform mit einer Positionieranordnung des Haltekerns mit Einlegeteil gemäß Fig. 13,
- Figur 15: eine Positionierung eines Einlegeteils auf einem Haltekern mit Gewinde in einem Formhohlraum,
- Figur 16: einen Haltekern mit Gewinde, der aus einem Formhohlraum herausschraubbar ist,
- Figur 17: eine schematische Darstellung eines Einlegeteils auf einem Haltekern,
- Figur 17a: eine schematische Darstellung des Dichtelements mit konischem Bereich,
- Figur 18: eine schematische Darstellung einer Gussform mit einer Positionieranordnung des Haltekerns mit Einlegeteil,
- Figur 19: eine schematische Darstellung einer Gussform mit einer Positionieranordnung für einen Haltekern mit Einlegeteil,
- Figur 20: eine schematische Darstellung einer Gussform mit einer Positionieranordnung eines Haltekerns mit einem Einlegeteil,
- Figur 21: einen Haltekern, auf den das Einlegeteil aufsteckbar ist und der aus dem Formhohlraum heraus versetzbar ist,
- Figur 22: schematische Darstellung der Abkühlung des Gussmaterials und der Erwärmung des Kunststoffes des Einlegeteils
- Figur 23: ein Flussdiagramm einer bevorzugten Ausführungsform eines Gussvorbereitungsverfahrens und

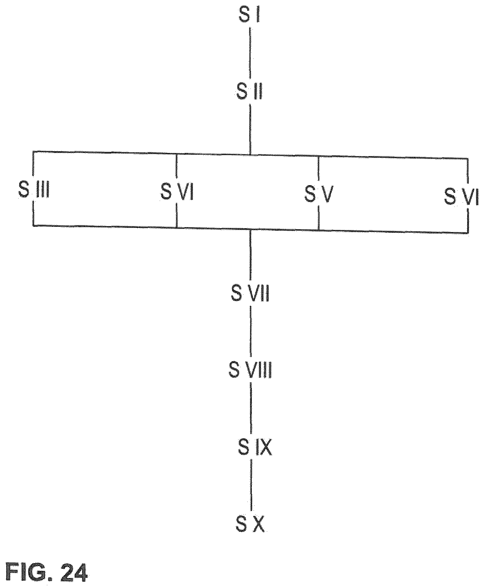

- Figur 24: ein Flussdiagramm einer bevorzugten Ausführungsform eines Metallgussverfahrens oder Kunststoffspritzgussverfahrens.

### 5. Bevorzugte Ausführungsformen

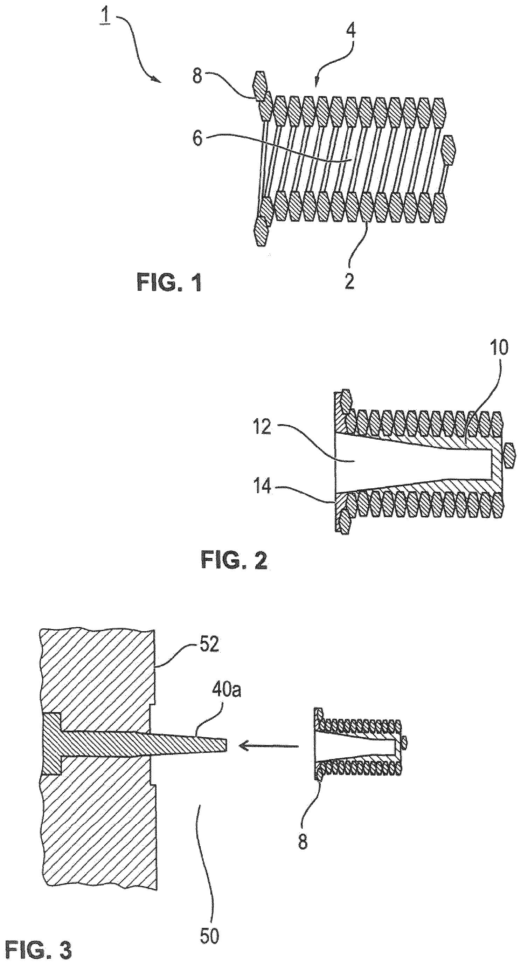

Figur 1 zeigt eine schematische Darstellung eines Einlegeteils 1, das bei der Herstellung eines Bauteils mithilfe eines Metallguss- oder Spritzgussverfahrens in diesem Bauteil befestigt werden soll. Zu derartigen Einlegeteilen 1 zählen Gewindeeinsätze, hülsenförmige Steckverbinder, Drahtgewindeeinsätze mit (siehe Fig. 1) oder ohne stirnseitigem Flansch und auch elektrische Verbinder ähnlich einer Buchse. Ein derartiges Einlegeteil 1 wird in einem Formhohlraum einer Metallguss- oder einer Kunststoffspritzgussform positioniert, die nachfolgend mit Metallschmelze oder Kunststoffschmelze ausgegossen wird. Die Gussform ist schematisch in den Fig. 3-6, 8, 10-12, 14-16, 18-21 dargestellt. Auf diese Weise werden beispielsweise Motorblöcke oder Getriebegehäuse im Aluminiumdruckguss oder Kunststoff-Gerätegehäuse im Kunststoffspritzguss hergestellt. Vorzugsweise werden im Metallgussverfahren Leichtmetalle, insbesondere Aluminium, Magnesium und deren Legierungen, sowie Zink, Gusseisen, Kupfer, Stahl und deren Legierungen verarbeitet. Beim Kunststoffspritzguss werden vorzugsweise bekannte Thermoplaste, Duroplaste und/oder Elastomere eingesetzt, wie beispielsweise Polyamid (PA), Polyoxymethylen (POM), Polyetheretherketon (PEEK) oder Polystyrol PS).

Um Taktzeiten bei der Herstellung von Gussteilen zu reduzieren und ein optimales Ausgießen des Formhohlraums 50 der Metallgussform zu gewährleisten, wird vorzugsweise die Metallschmelze mit einem Druck von bis zu 2000 bar, vorzugsweise 400 bis 1200 bar, eingegossen. Die Metallschmelze erreicht dazu in der Metallgussform eine Metallgeschwindigkeit von bis zu 100 m/s, vorzugsweise 20 bis 60 m/s. Die Viskosität der Metallschmelze wird vorzugsweise auf bis zu 1 Pa s eingestellt. Im druckunterstützten Metallguss und im Druckguss nutzt man gemäß einer Ausführungsform Viskositäten im Bereich von 0,8 bis 1,5 mPa s.

Gemäß einer weiteren bevorzugten Ausführungsform vorliegender Erfindung werden Bauteile mit Einlegeteil 1 in einem druckunterstützten Aluminiumgussverfahren oder in einem Aluminiumdruckgussverfahren hergestellt. Es ist ebenfalls bevorzugt, das oben genannte Semi-Solid-Metalcasting (SSM) als Urformverfahren bei der Verarbeitung von Metallen einzusetzen. Bei dieser Form des Metallgussverfahrens wird ein Metall oder eine Legierung bis zur Übergangstemperatur zwischen fest und flüssig erhitzt. Der auf diese Weise erreichte thixotrope Zustand des Metalls unterstützt das Einbringen der Metallschmelze in die Metallgussform. In diesem Verfahren werden beispielsweise Aluminium- und Magnesiumlegierungen sowie Stähle verarbeitet. Für Semi-Solid-Verfahren findet bevorzugt ein Viskositätsbereich von 0,01 bis 1 Pa s Anwendung. Für das bevorzugte Kunststoffspritzgussverfahren werden gängige Werkstoffe verwendet, wie vorzugsweise die folgenden Materialien einzeln oder in Kombination: Polystyrol (PS), Polycarbonat (PC), Polyamid (PA), Polyetheretherketon (PEEK), Polyimid (PI), Polyamidimid (PAI), Liquid Crystal Polymer (LCP), Polyoxymethylen (POM) und Polymethylmethacrylat (PMMA).

Das Einlegeteil 1 ist erfindungsgemäß ein Drahtgewindeeinsatz. Die Eigenschaften des Einlegeteils 1 werden beispielgebend anhand des in Fig. 1 dargestellten Drahtgewindeeinsatzes erläutert. Dieser Drahtgewindeeinsatz besteht aus benachbarten Windungen 2, die aneinander anliegen. Die Windungen 2 bilden eine zusammenhängende Spirale 4, die einen Hohlraum 6 definiert. Diese Spirale 4 ist an den Stirnseiten offen, wobei eine Stirnseite in einen sich radial aufweitenden Flansch 8 übergeht. Die radiale Außenseite und die Stirnseiten der Spirale 4 bilden die Außenwand des Drahtgewindeeinsatzes, die teilweise durchbrochen ist und dadurch eine Verbindung zwischen dem Hohlraum und der Umgebung des Drahtgewindeeinsatzes herstellt. Es ist in gleicher Weise auch ein Drahtgewindeeinsatz ohne Flansch 8 oder mit zwei stirnseitig angeordneten Flanschen (nicht gezeigt) bevorzugt.

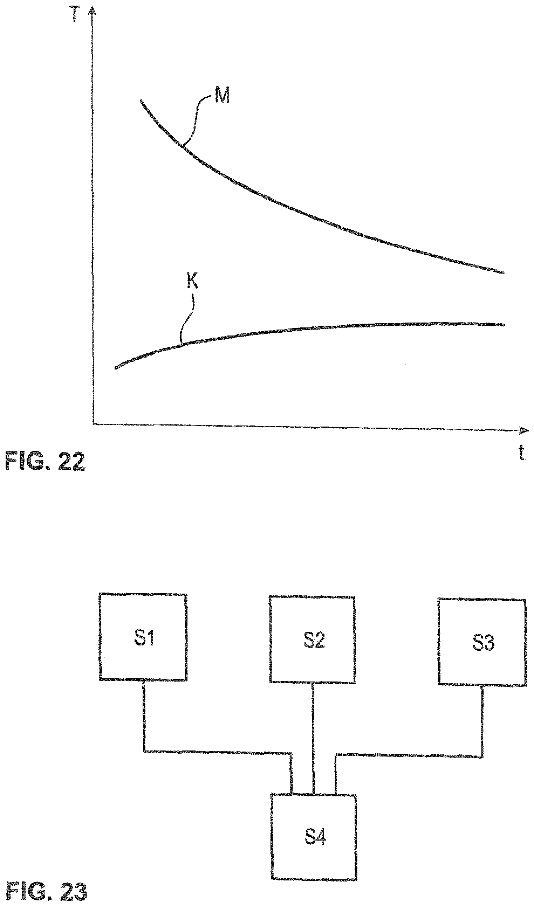

Wird der Drahtgewindeeinsatz als Einlegeteil 1 in ein Gussteil eingearbeitet, besteht die Gefahr, dass Metall- oder Kunststoffschmelze während des Gussverfahrens in den Hohlraum 6 eindringt. Um dies zu vermeiden, wird die zumindest teilweise durchbrochene Außenwand des Drahtgewindeeinsatzes vor der Durchführung des Gussverfahrens abgedichtet. Die Abdichtung erfolgt in radialer und stirnseitiger Richtung, in dem der Hohlraum 6 durch einen abdichtenden Kunststoff zumindest teilweise ausgegossen wird. Das Ausgießen erfolgt vorzugsweise durch ein Spritzgussverfahren, wodurch gemäß einer Alternative eine Innenwand des Hohlraums 6 zumindest teilweise, vorzugsweise vollständig, abdichtend mit einer Kunststoffschicht versehen wird (Schritt S1 des Gussvorbereitungsverfahrens, Fig. 22). Diese Kunststoffschicht erstreckt sich vorzugsweise über die dem Flansch 8 abgewandte Stirnseite des Drahtgewindeeinsatzes. Die Kunststoffbeschichtung an der Innenwand des Hohlraums 6 ist gemäß einer Ausführungsform so dünn ausgebildet, dass der Drahtgewindeeinsatz immer noch auf einen Haltekern 40c mit Gewinde aufgeschraubt oder auf einen zylindrischen oder konisch geformten Haltekern 40a, 40d ohne Gewinde aufgesteckt werden kann (siehe unten).

Gemäß einer weiteren Ausführungsform vorliegender Erfindung wird der beschichtende und abdichtende Kunststoff derart in den Hohlraum 6 eingebracht (Schritt S2 des Gussvorbereitungsverfahrens, Fig. 22), dass der Hohlraum durch die Kunststoffschicht 10 eine an einen Haltekern 40a, 40c, 40d angepasste Form oder eine mit dieser Form des Haltekerns zusammenpassende Form erhält (siehe Fig. 2, 13, 17). Die Kunststoffschicht 10 bildet daher einen Aufnahmeraum 12 für den Haltekern 40a, 40c, 40d. Der Aufnahmeraum 12 ist zylindrisch oder konisch geformt, um einen zylindrisch 40d und/oder konisch ausgebildeten Haltekern 40a aufzunehmen.

Die Kunststoffschicht 10, die gleichzeitig eine Kunststoffhülle für den Haltekern 40a, 40c, 40d im Drahtgewindeeinsatz darstellt, realisiert vorzugsweise eine vollständige Abdichtung des Drahtgewindeeinsatzes in radialer Richtung und in Richtung der flanschabgewandten Stirnseite. Des Weiteren wird der Drahtgewindeeinsatz durch das Aufstecken auf den Haltekern 40a, 40d exakt und kraftschlüssig durch einen Presssitz in der Gussform positioniert. Da der Haltekern 40a die Kunststoffschicht 10 radial auswärts verdrängt, wird dadurch ein abdichtender Sitz der Kunststoffschicht 10 an den Windungen 2 unterstützt.

Der Kunststoff der Kunststoffschicht 10 wird vorzugsweise im Spritzguss, Schwerkraftguss oder im Vakuumgussverfahren in den Drahtgewindeeinsatz eingebracht.

Wie unten noch näher erläutert wird, wird der Kunststoff bevorzugt zur inneren Auskleidung des Einlegeteils zur äußeren Beschichtung des Haltekerns, aber auch zur Herstellung eines vollständig aus Kunststoff bestehenden Haltekerns verwendet. Der Kunststoff realisiert aufgrund seines Materialverhaltens eine Positionierungs- und Haltefunktion im Formhohlraum 50 der Gussform GF. Zu diesem Zweck weist der Kunststoff eine nahezu wärmeunabhängige Festigkeit auf. Entsprechend ist vorzugsweise die Festigkeit des eingesetzten Kunststoffs trotz der starken Erwärmung und Abkühlung während des Metallgussverfahrens oder des Kunstspritzgussverfahrens konstant. Dadurch wird eine definierte Lage und Position des Einlegeteils 1 im Formhohlraum 50 sichergestellt.

Da die Festigkeit des Kunststoffs geringer ist als bei einem Haltekern aus vorzugsweise Stahl, werden durch diesen Kunststoff konstanter Festigkeit mechanische Spannungen im Gussteil 70 abgebaut. Dies liegt daran, dass der Kunststoff Formänderungen des Gussteils 70 folgen kann. Derartige Formänderungen haben folgenden Ursprung.

Nachdem das Einlegeteil 1 im Formhohlraum 50 gemäß der unterschiedlichen Alternativen (siehe vollständige Beschreibung) positioniert worden ist, wird die Druckgießform geschlossen und der Formhohlraum 50 mit Metall- oder Kunststoffschmelze gefüllt. Das Einbringen der heißen Materialschmelze verläuft mit hoher Geschwindigkeit und mit einem hohen Nachdruck. Aufgrund der relativ niedrigen Temperatur der Gussform GF im Vergleich zur Temperatur der Materialschmelze gerade beim Metallguss kommt es zu einer schlagartigen Erstarrung der Materialschmelze an der Wand 52 der Gussform GF. Die Abkühlung der Materialschmelze setzt sich von der Innenwand 52 des Formhohlraums 50 der Gussform GF ins Innere des Gussteils 70 fort und wird von Materialschwindungsvorgängen begleitet. Diese Materialschwindungsvorgänge variieren in Abhängigkeit von der Geometrie des Gussteils 70, dem Material des Gussteils 70 und den Temperaturunterschieden zwischen der Gussform GF und dem Gussteil 70 in ihrer Richtung, Stärke und/oder Geschwindigkeit.

Die Materialschwindungsvorgänge bewirken eine Positionsänderung des Einlegeteils 1 im Vergleich zur Position des Haltekerns 40, was mechanische Spannungen im abkühlenden Gussteil 70 zur Folge hat. Diese mechanischen Spannungen werden durch ein Nachgeben des Kunststoffs reduziert, wozu der Kunststoff bevorzugt verschiedene Eigenschaften haben kann (siehe unten). Des Weiteren werden diese mechanischen Spannungen vorzugsweise dadurch reduziert, dass nach der Erstarrung des Gussmaterials und noch vor dem Entformen des Gussteils 70 aus dem Formhohlraum 50 der jeweilige Haltekern 40 aus dem Einlegeteil 1, vorzugsweise mechanisch und/oder hydraulisch entfernt wird (siehe unten). Auf diese Weise wirkt der Haltekern nicht länger den Schwindungsvorgängen entgegen oder der Kunststoff gibt unter der mechanischen Belastung der Schwindungsvorgänge nach, was zur mechanischen Entlastung des Gussbauteils 70 führt.

Weiterhin erfindungsgemäß bevorzugt weist der Kunststoff, der den Haltekern 40 oder eine innere Beschichtung/Füllung im Einlegeteils 1 bildet (siehe unten) eine wärmeabhängige Festigkeit auf. Diese wärmeabhängige Festigkeit nimmt vorzugsweise mit zunehmender thermischer Belastung, d. h. mit zunehmender Erwärmung des Kunstoffs, ab, um auftretenden Schwindungsvorgängen des abkühlenden Gussmaterials folgen zu können. Diesen Zusammenhang veranschaulicht Fig. 22, wo die Temperaturänderung in Abhängigkeit von der Zeit dargestellt ist. Die Kurve M beschreibt das Abkühlungsverhalten des Metalls oder Kunststoffs im Gussteil. Die Kurve K beschreibt die Erwärmung des Kunststoffs im Einlegeteil in Abhängigkeit von der Wärmeabgabe des Gussmaterials. Da sich der Kunststoff mit der Zeit erwärmt, nimmt auch bevorzugt seine Festigkeit ab. Daher kann der Kunststoff den im Gussteil auftretenden Schwindungsvorgängen folgen und kritische mechanische Spannungszustände vermeiden.

Gemäß einer weiteren erfindungsgemäß bevorzugten konstruktiven Ausgestaltung des Kunststoffhaltekerns 40b oder der Kunststoffbeschichtung/-füllung im Einlegeteil 1 ist mindestens eine Sollbruchstelle 18 im Kunststoff vorgesehen (siehe unten). Diese Sollbruchstelle 18 gibt durch Versagen des Kunststoffs den Materialschwindungsvorgängen nach, sodass mechanische Spannungen im Gussteil 70 vermindert werden. Vorzugsweise ist die Sollbruchstelle 18 derart angeordnet, dass der Kunststoff quer oder schräg zur Längsachse des Haltekerns 40 oder des Einlegeteils 1 versagt und dadurch einen mechanischen Spannungsausgleich ermöglicht.

Auf diese Weise werden Beschädigungen am Einlegeteils 1, wie bspw. eine Verformung des Gewindes am Drahtgewindeeinsatz vermieden. Es ist in diesem Zusammenhang ebenfalls denkbar, die obigen Alternativen einzeln oder in beliebiger Kombination miteinander einzusetzen.

Erfindungsgemäß weist der Drahtgewindeeinsatz an seiner flanschseitigen Stirnseite einen abdichtenden Kragen 14 auf. Der Kragen 14 ist vorzugsweise mit der Kunststoffschicht 10 verbunden und bildet dadurch ein zusammenhängendes Abdichtelement im Drahtgewindeeinsatz (siehe Fig. 2). In gleicher Weise ist es bevorzugt, den Kragen 14 getrennt von der Kunststoffschicht 10 oder -füllung anzuformen (nicht gezeigt). Bevorzugt wird der Kragen 14 angespritzt (Schritt S4, Fig. 22). Gemäß Fig. 2 ist der Kragen 14 ringförmig oder scheibenförmig ausgebildet. Gemäß einer bevorzugten Ausführungsform besitzt der Kragen 14 die radiale Ausdehnung des Flansches 8, wobei er sich aber auch radial über diesen Flansch 8 hinaus erstrecken kann. Der Kragen 14 dichtet die Grenzfläche zwischen einer Innenwand 52 einer Gussform und dem Flansch 8 gegen das Eindringen von Materialschmelze ab (siehe Fig. 3). Daher hat der Kragen 14 vorzugsweise eine Stärke von 0,1 mm bis 5 mm in axialer Richtung des Einlegeteils bzw. Drahtgewindeeinsatzes oder senkrecht zur Innenwand 52 des Formhohlraums 50. Zudem ist der Kragen 14 bevorzugt flexibel ausgebildet, sodass er sich an Unebenheiten an der Grenzfläche zwischen der Innenwand 52 und dem Flansch 8 des Drahtgewindeeinsatzes optimal anpasst.

Vorzugsweise wird ein temperaturbeständiger Kunststoff für die Kunststoffschicht 10 und den Kragen 14 eingesetzt. Geeignete Kunststoffe für den Metallguss sind beispielsweise Polyetheretherketon (PEEK), Polyamiimid (PAI), Polyimid (PI), Liquid Crystal Polymer (LCP), Polybenzimidazol (PBI), Polysulfon (PSU), Dentalkunststoffe, Silikone, Fasern oder Verbundmaterialien. Es handelt sich daher bevorzugt um Elastomere in Form von Silikon und silikonbasierten Werkstoffen. Zudem bevorzugt sind Thermoplaste, wie bspw. TPE, mit einer erhöhten Glasübergangstemperatur.

Eine Positionierung des Drahtgewindeeinsatzes im Formhohlraum 50 der Metallguss- oder Kunststoffspritzgussform zeigt Fig. 3. Der Haltekern 40a bildet eine Positioniervorrichtung, um den Drahtgewindeeinsatz im Formhohlraum 50 stabil anzuordnen. Da der Haltekern 40a vorzugsweise konisch geformt ist, unterstützt er gleichzeitig in Kombination mit der Kunststoffschicht 10 und dem Kragen 14 die Positionierung, Fixierung und Abdichtung des Drahtgewindeeinsatzes im Formhohlraum 50. Die konische Steigung des Haltekerns 40a (vorzugsweise 1/20) wird bevorzugt so ausgestaltet, dass eine Selbsthaftung des Drahtgewindeeinsatzes auf dem Haltekern 40a erzielt wird.

Der in Fig. 2 dargestellte Drahtgewindeeinsatz ist durch den eingebrachten Kunststoff an den Stirnseiten und an der Umfangsseite, also an seiner Außenwand, vor der einfließenden Metall- oder Kunststoffschmelze geschützt. Der innen liegende konische Aufnahmebereich ermöglicht das Aufstecken und Fixieren mit gleichzeitigem Abdichten des Drahtgewindeeinsatzes in der Gussform. In Abstimmung mit dem Haltekern 40a wird die Abdichtung im Gewindeeinsatz so ausgeführt, dass eine Fixierung des Drahtgewindeeinsatzes über das Prinzip der Selbsthemmung auf dem Haltekern erzielt wird. Die Abdichtung erfolgt dabei vorzugsweise nicht durch ein Nachdrücken über den Haltekern 40a oder durch eine zusätzliche Nachverdichtung per Luftdruck, wird aber vorzugsweise dadurch unterstützt. Der eingespritzte Kunststoff fließt an der Innenseite des Hohlraums 6 des Drahtgewindeeinsatzes direkt bis in die Gewindegänge, sodass auf diese Weise das Abdichten des Drahtgewindeeinsatzes nach außen erzielt wird. Da der Kunststoff vorzugsweise in flüssiger Form direkt in den Hohlraum 6 des Drahtgewindeeinsatzes eingebracht wird, ist auch keine zusätzliche Montagehilfe zum Einbringen einer Abdichtung in den Hohlraum 6 erforderlich.

Durch die Positionierung des Drahtgewindeeinsatzes auf dem Haltekern 40a wird eine hohe Positionierungstreue des Drahtgewindeeinsatzes erreicht. Daher ist diese Konstruktion gerade bei der Verwendung von Drahtgewindeeinsätzen im Aluminiumdruckgießprozess mit Füllgeschwindigkeiten von 20 bis 60 m/s, im Magnesiumdruckgießprozess mit Füllgeschwindigkeiten von 20 bis 100 m/s und jeweils mit Nachverdichtungsdrücken von 400 bis 2000 bar, insbesondere 400 - 1200 bar, bevorzugt. Nach dem Entformen (SVIII) des Bauteils mit dem abgedichteten Drahtgewindeeinsatz aus der Gussform ergibt sich vorzugsweise durch den bündigen Abschluss des Flansches 8 mit der Bauteiloberfläche, das keine Materialrückstände oder Überstände über die Bauteilwand durch nachträglich auszuführende Bearbeitungsschritte entfernt werden müssen. Zudem gewährleistet die Kunststoffabdichtung im Drahtgewindeeinsatz bis zu deren Entfernung einen sicheren Schutz des Inneren des Drahtgewindeeinsatzes vor einer Beschädigung oder Verschmutzung.

Um neben der Positionierungstreue auch eine optimale Anpassung an Schwindungsvorgänge des Gussmaterials realisieren zu können, ist der Kunststoff 10 im Inneren des Einlegeteils 1 gemäß Fig. 2 vorzugsweise angepasst, wie es oben beschrieben worden ist. Das heißt der Kunststoff der Kunststoffschicht 10 und vorzugsweise der des Kragens 14 besitzt eine annähernd wärmeunabhängige Festigkeit oder eine wärmeabhängige Festigkeit, die mit zunehmender thermischer Belastung abnimmt. Die entsprechende Erwärmung des Kunststoffs ist in Fig. 22 schematisch veranschaulicht.

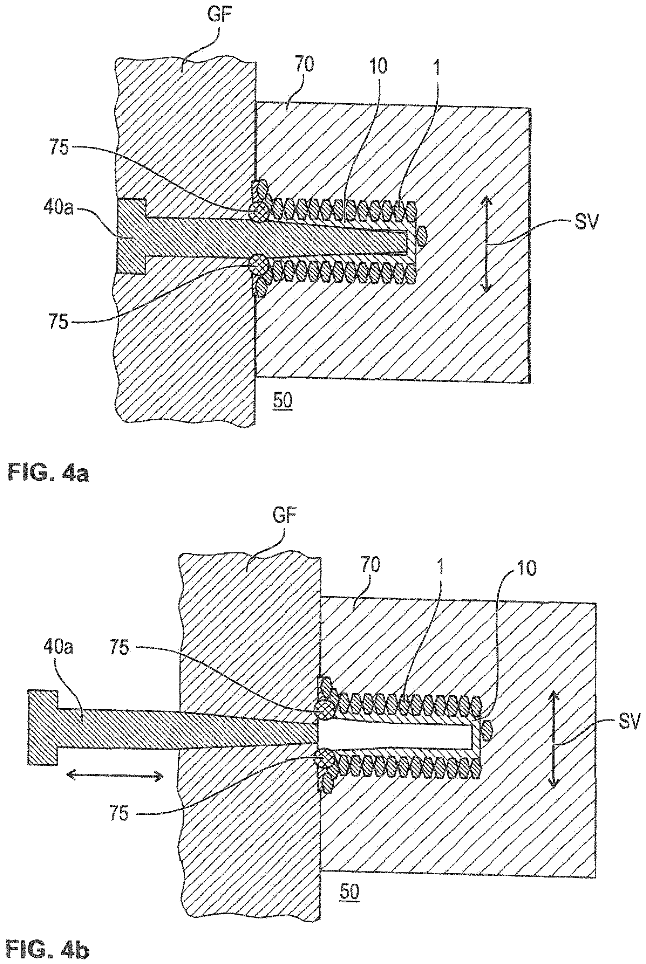

Bezugnehmend auf Fig. 4 ist in einer bevorzugten Ausführungsform vorliegender Erfindung schematisch veranschaulicht, wie sich Schwindungsvorgänge SV im Gussteil 70 auswirken. Das Einlegeteil 1 ist mit einer Kunststoffschicht 10 wärmeunabhängiger Festigkeit ausgekleidet. Die Kunststoffschicht 10 dient als Fixierung auf dem Haltekern 40a und als Abdichtung. Vorzugsweise wird die Kunststoffschicht auch als Kunststoffhülse auf dem Haltekern 40a angesehen. Der Haltekern besteht bevorzugt aus Stahl, Keramik, Metall oder Kunststoff.

Nach dem Einbringen der Schmelze in den Formhohlraum 50 finden die Erstarrungsschrumpfung und die Schwindungsvorgänge SV im Gussteil 70 statt, wie durch den Pfeil angedeutet ist. Gerade an der Grenzfläche zwischen Gießform GF und Gussteil 70 wirkt sich die Formstabilität der Gießform GF im Unterschied zu den Schwindungsvorgängen SV im Gussteil 70 aus.

Nahe den Grenzflächen zwischen Haltekern 40a und Gussteil 70 sind Spannungs- und Verformungszonen 75 schematisch angedeutet. Diese Spannungs- und Verformungszonen 75 entstehen, weil der Haltekern 40a durch die starre Gießform GF gehalten wird und das Einlegeteil 1 im Gussteil 70 versucht seine Position aufgrund von Schwindungsvorgängen SV zu verändern. In Abhängigkeit vom verwendeten Gussmaterial fallen vorzugsweise die Schwindungsvorgänge SV des Gussmaterials gering aus, sodass ein Kunststoff 10 mit wärmeunabhängiger Festigkeit, die geringer ist als die Festigkeit des Haltekerns 40a, diese ausgleichen oder reduzieren kann.

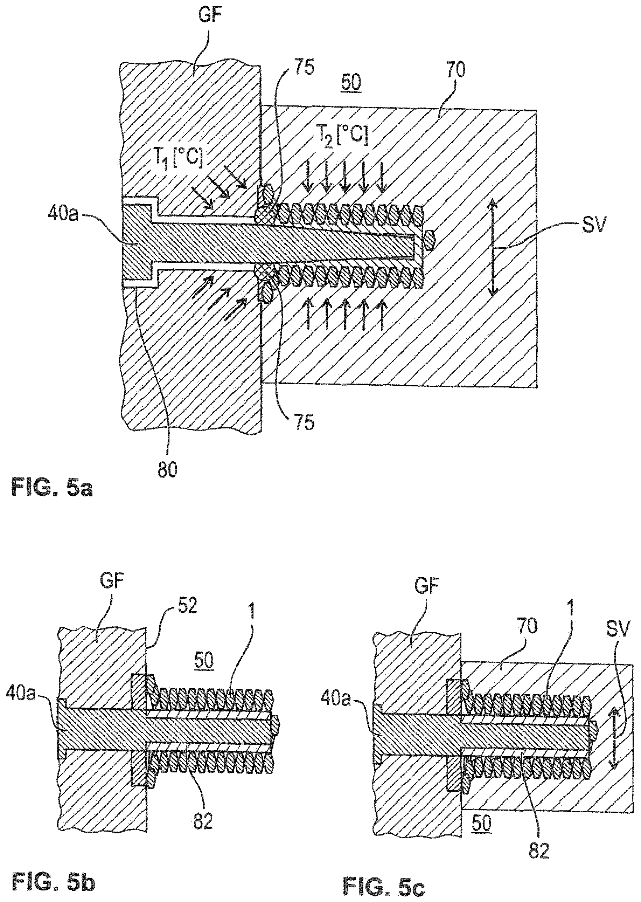

Gemäß Fig. 5a wirken sich aufgrund der Wahl des Gussmaterials die Schwindungsvorgänge SV stärker aus. Auch ist der Temperaturunterschied zwischen Gießform GF und Gussteil 70 ausschlaggebend, wie durch die eingezeichneten Temperaturen T₁ in der Gießform GF und T₂ im Gussteil 70 angedeutet ist. Um die Spannungs- und Verformungszonen 75 zu entlasten, besteht die Kunststoffschicht 10 aus einem Kunststoff mit wärmeabhängiger Festigkeit die mit zunehmender Erwärmung zunimmt. Der Kunststoff 10 erwärmt sich mit zunehmender Abkühlung des Gussmaterials (siehe Fig. 22). Mit dieser Erwärmung nimmt die Festigkeit des Kunststoffs ab und somit seine Flexibilität zu. Daher kann der Kunststoff mit zunehmender Erwärmung auftretenden Schwindungsvorgängen nachgeben oder diesen folgen. Dies unterstützt den Abbau von mechanischen Spannungen im Gussbauteil 70, ohne dass der Haltekern 40a aus der Gießform GF entfernt werden muss.

Gemäß einer weiteren bevorzugten Ausgestaltung ist der Haltekern 40a gemäß Fig. 4b) aus dem Einlegeteil 1 nach dem Ausgießen des Formhohlraums 50 und vor dem Entformen des Gussteils 70 entfernbar. Dies erfolgt vorzugsweise durch Ziehen oder Herausdrehen/Schrauben des Haltekerns 40a. Das Entfernen des Haltekerns 40a gewährleistet freie Schwindungsvorgänge im Gussteil 70. Zudem wird durch das Entfernen des Haltekerns 40a genauso wie für das Entfernen von Haltekernen beliebiger Konfiguration aus dem Formhohlraum 50 mit Gussteil 70 erst ermöglicht, dass das vorliegende Gussverfahren für Gussteile 70 anwendbar ist, deren Einlegeteile 1 und die sie positionierenden Haltekerne 40 in ihrer Längsrichtung nicht parallel zur Auszugsrichtung und/oder zur Entformungsrichtung des Gussteils 70 aus dem Formhohlraum 50 orientiert sind. In gleicher Weise muss die Öffnungsbewegung der Formhälften oder Formteile nicht parallel, sondern kann beliebig orientiert zur Längsachse der Einlegeteile 1 und ihrer Haltekerne 40 erfolgen.Gemäß einer weiteren bevorzugten Ausführungsform vorliegender Erfindung ist der Haltekern 40 sowie allgemein auch Haltekerne anderer Bauart (siehe unten) in einer Öffnung 80 mit zuschaltbarem Spiel für den Haltekern gehalten (siehe Fig. 5a). Während des Ausgießens der Gießform GF mit Materialschmelze wird der Haltekern 40a ohne Spiel in der Fassung 80 gehalten. Sobald die Erstarrungsschrumpfung und die Schwindungsvorgänge SV einsetzen, wird in der Fassung 80 dem Haltekern 40a ein gewisses Spiel gestattet. Dieses laterale und/oder axiale Spiel wird vorzugsweise durch Freigeben des Haltekerns 40a in der Gießform GF ermöglicht, sodass sich der Haltekern 40 im Bereich der Öffnung 80 axial und lateral bewegen kann, ohne herauszufallen. Mithilfe dieser konstruktiven Voraussetzung kann jeder beliebige Haltekern 40 allein oder in Kombination mit der Kunststoffschicht 10 mechanische Spannungen ausgleichen, die durch Erstarrungsschrumpfung und/oder Schwindungsvorgänge SV im Gussteil 70 erzeugt werden.

Zu diesem Zweck wird der Haltekern 40 vorzugsweise in einer mechanisch, elektromechanisch oder hydraulisch freigebaren Fassung 80 gehalten. Diese Fassung 80 besteht vorzugsweise aus form- und/oder kraftschlüssig arbeitenden Komponenten. In gleicher Weise ist auch eine piezoelektrische Fassung 80 denkbar, die den Haltekern 40 klemmt und basierend auf einem elektrischen Signal freigibt.

In den Figuren 5b und 5c ist eine weitere bevorzugte Ausführungsform eines Haltekerns 40a in Kombination mit einer Funktionshülse 82 gezeigt. Während in Fig. 5a eine spielgebende Halterung 80 für den Haltekern 40a werkzeugseitig beschrieben worden ist, wird vorzugsweise gemäß den Figuren 5b und 5c die spielgebende Funktionshülse 82 auf dem Haltekern 40a, also werkstückseitig, innerhalb des Formhohlraums 50 angeordnet. Die Funktionshülse 82 ist in der Lage, sich in radialer Richtung auszudehnen und zu verkürzen. Entsprechend zeigt die Figur 5b den Haltekern 40a mit Funktionshülse 82, auf der das Einlegeteil 1 positioniert worden ist, noch bevor eine Materialschmelze in den Formhohlraum 50 eingebracht worden ist. In diesem Zustand weist die Funktionshülse 82 eine ausreichend große radiale Ausdehnung auf, um das Einlegeteil 1 auf dem Haltekern 40a zu befestigen. Nach dem Füllen des Formhohlraums 50 mit Materialschmelze und der einsetzenden Abkühlung des Gussmaterials 70 finden Schwindungsvorgänge SV im Gussmaterial 70 statt. Damit das Einlegeteil 1 diesen Schwindungsvorgängen SV folgen kann und durch das Halten des Halterkerns 40a kritische mechanische Spannungszustände im Gussmaterial 70 vermieden werden, wird die radiale Ausdehnung der Funktionshülse 82 verringert. Auf diese Weise entsteht ein Spiel zwischen der Funktionshülse 82 und dem Einlegeteil 1. Eine derartige Funktionshülse 82 realisiert somit funktionell eine radiale Klemmung und Freigabe des Einlegeteils 1 auf dem Haltekern 40a vorzugsweise in Abhängigkeit von Materialschwindungsvorgängen SV. Es sind daher alle Materialien und Hülsenkonstruktionen als Funktionshülse 82 geeignet, die eine derartige radiale Klemmung und Freigabe gesteuert realisieren können. Gemäß einer bevorzugten Ausführungsform besteht eine derartige Funktionshülse 82 aus piezoelektrischem Material, das sich bei Anlegen einer elektrischen Spannung in radialer Richtung der Funktionshülse 82 ausdehnt oder zusammenzieht. In gleicher Weise sind technische Lösungen mit Hilfe von Hydraulik, elektromechanisch und/oder elektromagnetisch bevorzugt.

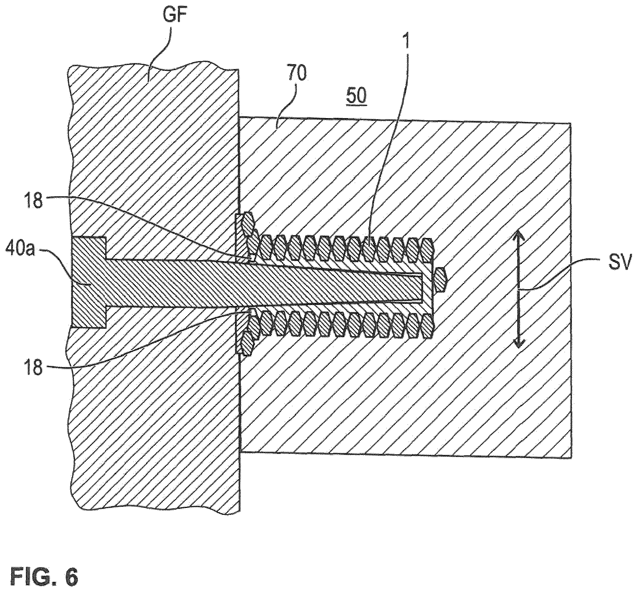

Fig. 6 zeigt eine weitere bevorzugte Ausführungsform vorliegender Erfindung zum Ausgleich von mechanischen Spannungszuständen im Bereich von Haltekern 40a, Einlegeteil 1 und Kunststoffschicht 10. Während hier mechanische Spannungszustände in gleicher Weise erzeugt werden, wie es oben bspw. in Bezug auf die Fig. 4 und 5 beschrieben worden ist, findet vorzugsweise eine Verminderung der mechanischen Spannungszustände auf andere Weise statt. Die das Einlegeteil 1 und die Kunststoffschicht 10 belastenden Schwindungsvorgänge SV wirken vorzugsweise quer oder schräg zur Längsachse des Einlegeteils 1. Damit das Einlegeteil 1 und/oder die Kunststoffschicht 10 die Kräfte der Schwindungsvorgänge SV angedeutet durch die Pfeile in Fig. 6 vermindern kann, ist mindestens eine Sollbruchstelle 18 in der Kunststoffschicht 10 vorgesehen. Die mindestens eine Sollbruchstelle 18 ist bevorzugt benachbart zur Innenwand 52 der Gießform GF in der Kunststoffschicht 10 angeordnet. Sie ist quer zur Längsrichtung des Einlegeteils 1 ausgerichtet, sodass im Versagensfall ein lateraler Versatz zwischen Haltekern 40a und Einlegeteil 1 und/oder Kunststoffschicht 10 erleichtert ist. In gleicher Weise ist es bevorzugt, mehrere Sollbruchstellen 80 in Längsrichtung verteilt über die Kunststoffschicht 10 anzuordnen (nicht gezeigt).

Es ist des Weiteren bevorzugt, die unter Bezugnahme auf die Fig. 4-6 beschriebenen Materialgestaltungen der Kunststoffschicht 10 und die konstruktiven Gestaltungen der Kunststoffschicht 10 allein oder in beliebiger Kombination einzusetzen, um mechanische Spannungen im Gussteil 70 zu vermindern. Dadurch werden auftretende Verformungen in der Kunststoffschicht 10 ausgeglichen und beschädigen nicht das Einlegeteil 1.

Nachdem Entformen des Gussteils 70 aus dem Formhohlraum 50 kann zudem der Kunststoffeinsatz 10 aus dem Einlegeteil 1 entfernt werden. Des Weiteren ist es bevorzugt, den Kunststoffeinsatz 10 für Nachbearbeitungsvorgänge des Gussteils 50 noch im Einlegeteil 1 zu belassen. Auf diese Weise wird das Einlegeteil 1 vor Verschmutzung geschützt.

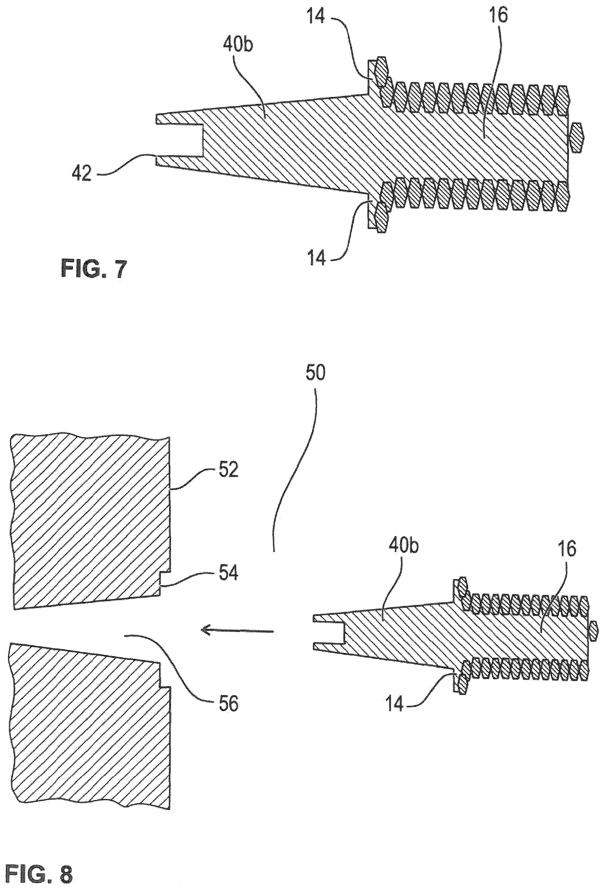

Eine weitere bevorzugte Ausführungsform des nach außen abgedichteten Drahtgewindeeinsatzes als Einlegeteil 1 zeigt schematisch in einer Schnittansicht Fig. 7. Der Drahtgewindeeinsatz ist in gleicher Weise durch eine innere Kunststoffschicht im Hohlraum 6 und durch den Kragen 14 gegen das Eindringen von Materialschmelze, d.h. flüssiges Metall oder Kunststoff, abgedichtet, wie es in Bezug auf die Ausführungsform gemäß Fig. 2 beschrieben worden ist. Im Unterschied zur Ausführungsform gemäß Fig. 2 ist der Drahtgewindeeinsatz gemäß Fig. 7 vollständig durch Kunststoff gefüllt worden (Schritt S3, Fig. 22). Dadurch ist der Drahtgewindeeinsatz an seiner radialen Außenseite und den Stirnseiten gegen das Eindringen von Materialschmelze geschützt.

Zudem wurde der eingebrachte abdichtende Kunststoff zu einem Haltekern 40b ausgeformt. Der Haltekern 40b erstreckt sich in axialer Richtung über den Flansch 8 hinaus. Er besitzt eine Form, sodass er in oder an der Innenwand 52 des Formhohlraums 50 befestigbar ist. Gemäß einer bevorzugten Ausführungsform der Gussform GF ist der Haltekern 40b in eine Öffnung 56 der Innenwand 52 einsteckbar. Die vorzugsweise konische Form des Haltekerns 40b sorgt für einen entsprechenden Halt im Formhohlraum 50, beispielsweise durch einen Presssitz. Dies ist in Fig. 8 gezeigt. Der Haltekern 40b ist bevorzugt auch zylindrisch geformt und die entsprechende Halterung im Formhohlraum 50 daran angepasst. In gleicher Funktionalität und Ausgestaltung wie die Ausführungsform aus Fig. 2 weist der Drahtgewindeeinsatz mit Haltekern 40b einen Kragen 14 auf.

Der Haltekern 40b besitzt zudem eine Passung 42. Die Passung 42 dient als Aufnahme für ein Werkzeug, d.h. als Antriebsmittel, um nach dem Eingießen (SVII) des Drahtgewindeeinsatzes in das Gussteil den Haltekern 40b und die Kunststoffdichtung 10 aus dem Drahtgewindeeinsatz zu entfernen.

Zur Herstellung des Gussteils wird der Haltekern 40b mit dem Drahtgewindeeinsatz in der Öffnung 56 der Innenwand 52 befestigt. Da sich der Drahtgewindeeinsatz mit seinem Kragen 14 an der Innenwand 52, vorzugsweise in der Vertiefung 54 abstützt, ist er gegen das Eindringen von Materialschmelze abgedichtet. Nachfolgend fließt Materialschmelze in den Formhohlraum 50 ein (SVII) und härtet dort aus. Vor dem Entformen (SIX) des Gussteils 70 wird vorzugsweise der mindestens eine Haltekern 40 aus dem Einlegeteil 1 entfernt (SVIII). Danach erfolgt das Entformen (SIX) des Gussteils 70. Nach dem Entformen (SIX) des Gussteils 70 wird mit einem Werkzeug der Haltekern 40b mit Kunststoffdichtung 16 aus dem Drahtgewindeeinsatz entfernt (SX).

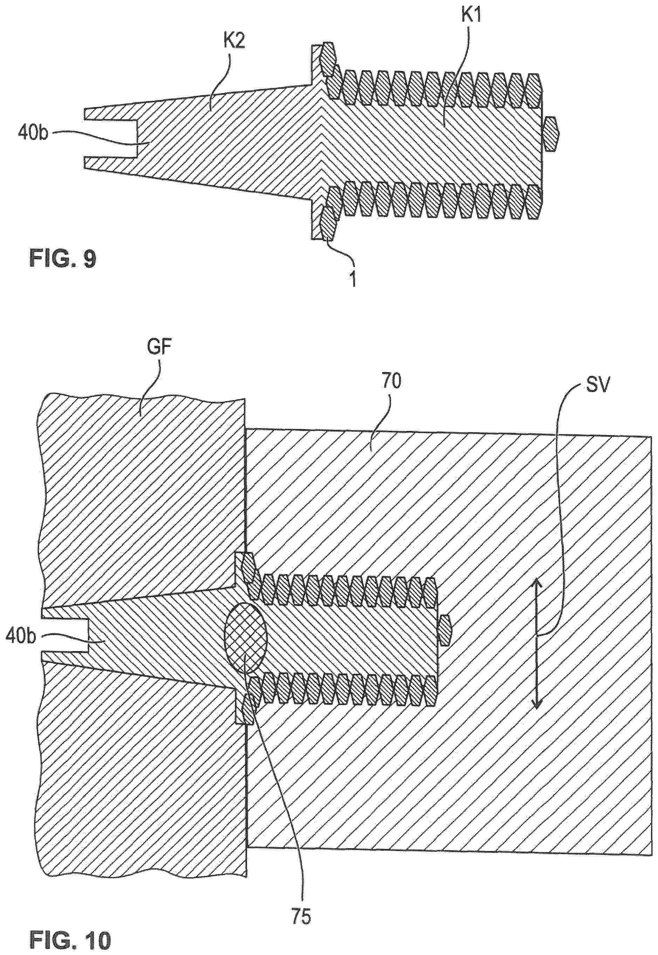

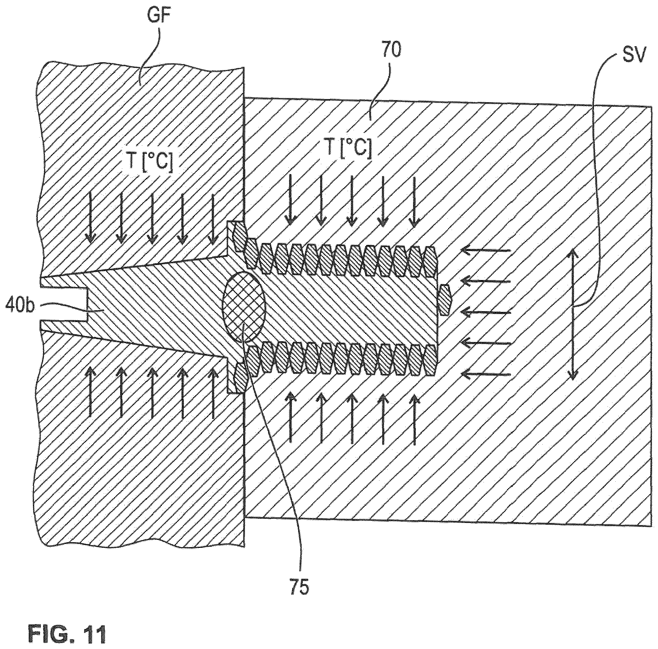

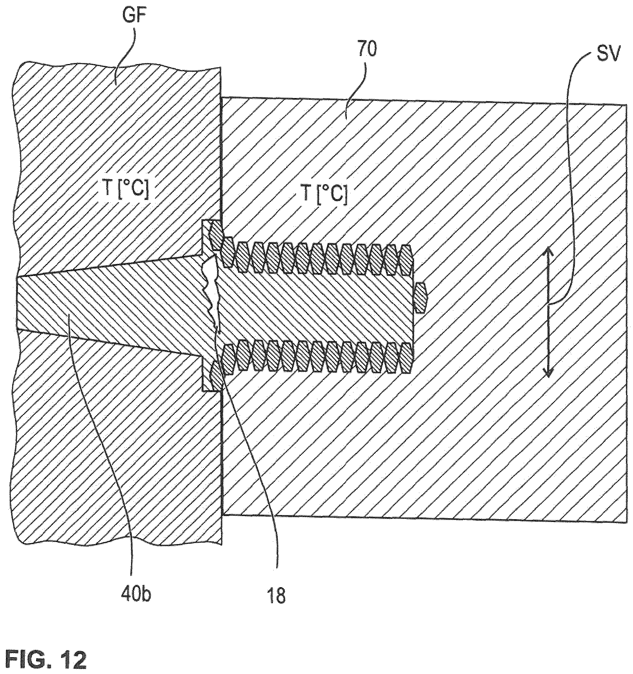

In Bezug auf Fig. 7 wurde bereits erläutert, dass der Haltekern 40b vorzugsweise vollständig aus Kunststoff besteht. Dieser Kunststoff ist in seiner Materialgestaltung vorzugsweise genauso aufgebaut, wie es oben unter Bezugnahme beispielsweise auf die bevorzugten Ausführungsformen der Figuren 4, 5 und 6 erläutert worden ist. Entsprechend besteht der Haltekern 40b gemäß Fig. 10 aus einem Kunststoff mit einer annähernd wärmeunabhängigen Festigkeit. Der Haltekern 40b gemäß Fig. 11 ist vorzugsweise aus einem Kunststoff aufgebaut, der eine wärmeabhängige Festigkeit aufweist, die mit zunehmender thermischer Belastung abnimmt. Fig. 12 zeigt schematisch einen bevorzugten Haltekern 40b aus Kunststoff, der mindestens eine Sollbruchstelle 18 umfasst. Die mindestens eine Sollbruchstelle 18 ist in gleicher Weise angeordnet und hat die gleiche Funktionalität wie die Sollbruchstelle aus Fig. 6.

Gemäß einer weiteren bevorzugten Ausführungsform vorliegender Erfindung, die mithilfe der unterschiedlich schraffierten Bereiche in Fig. 9 veranschaulicht ist, besteht der Haltekern 40b aus einer Kombination von mindestens zwei Kunststoffen K1, K2. Diese Kunststoffe K1, K2 können aus den Gruppen der oben beschriebenen Kunststoffe ausgewählt sein. Es ist ebenfalls bevorzugt, andere Kunststoffe miteinander zu kombinieren. Entsprechend werden bevorzugt in unterschiedlich mechanisch und/oder thermisch und/oder bezogen auf die thermische Ausdehnung unterschiedlich belastete Bereiche an diese Belastungen angepasste Kunststoffe eingesetzt. Diese ausgewählten Kunststoffe werden innerhalb des Haltekerns 40b kombiniert, sodass ein Mehrkomponentenhaltekern und/oder ein in axialer oder radialer Richtung mehrlagiger Haltekern und/oder ein Compound-Haltekern 40b vorliegt.

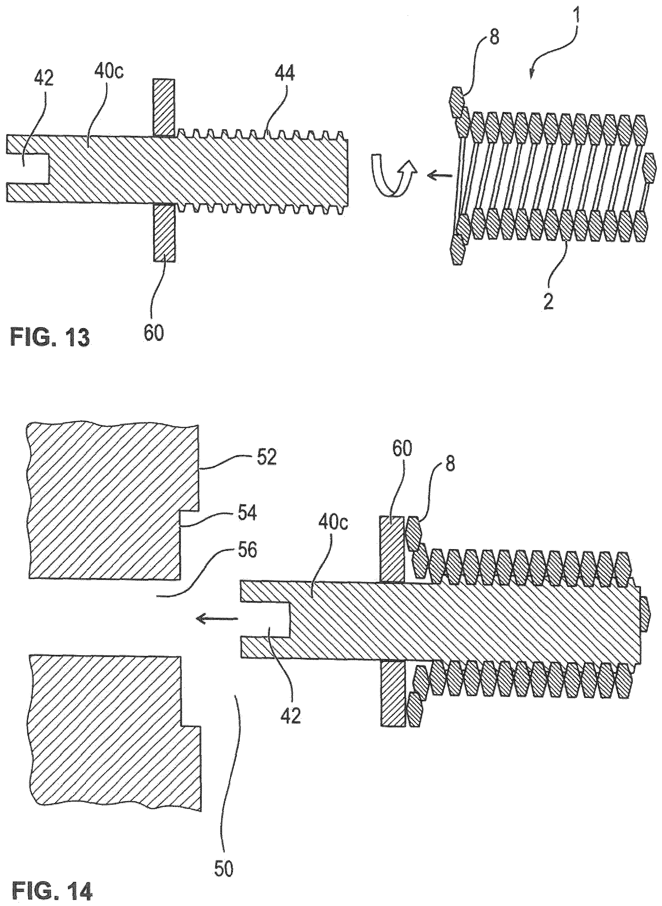

Gemäß einem in Fig. 13 und 14 gezeigten Beispiel wird der Drahtgewindeeinsatz auf einen Haltekern 40c mit Gewinde 44 aufgeschraubt. Der Haltekern 40c besteht vorzugsweise aus Metall, wobei hier auch Materialien, wie temperaturbeständige Kunststoffe oder Keramik, einsetzbar sind. Der Haltekern 40c umfasst zudem eine Passung 42 mit den gleichen Eigenschaften, wie sie oben bereits beschrieben worden sind im Hinblick auf die Ausführungsform der Figuren 7 und 8. Durch das Aufschrauben des Drahtgewindeeinsatzes auf den Haltekern 40c verschließt das Gewinde 44 mögliche Zwischenräume zwischen benachbarten Windungen 2.

Zudem blockiert der Haltekern 40c ein Einfließen von Materialschmelze an den Stirnseiten des Drahtgewindeeinsatzes. Um diese Dichtfunktion des Haltekerns 40c mit Gewinde 44 zu unterstützen, wird vorzugsweise die Innenseite des Drahtgewindeeinsatzes und/oder das Gewinde 44 mit einer zusätzlich abdichtenden Kunststoffschicht überzogen. Im Hinblick auf die Wahl des Kunststoffs sind die bereits oben erläuterten Kunststoffarten bevorzugt.

Zur Abdichtung zwischen dem Flansch 8 und der Innenwand 52 des Formhohlraums 50 der Gussform ist ein ringförmiges oder scheibenförmiges Dichtelement 60 ähnlich dem Kragen 14 vorgesehen. Das ringförmige Dichtelement 60 besteht bevorzugt aus einem verformbaren oder flexiblen Material, um Unebenheiten an der Grenzfläche zwischen dem Flansch 8 des Drahtgewindeeinsatzes und der Innenwand 52, bevorzugt der Vertiefung 54, auszugleichen. Das Dichtelement 60 ist ein loses Element mit einer radialen Ausdehnung größer oder gleich der radialen Ausdehnung des Flansches 8 oder der Stirnseite des Drahtgewindeeinsatzes ohne Flansch 8. Die innere Öffnung des Dichtelements 60 ist an den Durchmesser des Haltekerns 40c angepasst, um hier ein Eindringen von Materialschmelze zu vermeiden.

Gemäß einer bevorzugten Ausführungsform vorliegender Erfindung ist der Kragen 14 (lose oder in Verbindung mit der inneren Kunststoffbeschichtung - oder -füllung) in radialer Richtung flächig ausgebildet, so dass sie in axialer Richtung eine konstante Stärke aufweisen. Alternativ dazu ist es bevorzugt, den Kragen 14 angrenzend an die Innenwand 52 flächig und angrenzend an den Drahtgewindeeinsatz 1 bzw. das Einlegeteil konisch auszubilden (konischer Bereich). Der konische Verlauf ist derart, dass die Stärke des Kragens 14 radial einwärts zunimmt, so dass der Kragen 14 im Querschnitt trichterförmig ausgebildet sind. Dadurch läuft der konische Bereich des Kragens 14 zumindest teilweise in den Drahtgewindeeinsatz 1 hinein oder wird in diesen abdichtend hinein gedrückt. Diese bevorzugten Ausführungsformen sind beispielgebend anhand des Dichtelements 60 mit dem konischen Bereich 62 in Fig. 8a illustriert. Es ist des weiteren bevorzugt, dass sich an den konischen Bereich des Kragens 14 (nicht gezeigt) in axialer Richtung eine umlaufende Dichtlippe 64 anschließt. Diese Dichtlippe 64 legt sich zusätzlich abdichtend an einen der gezeigten Haltekerne 40 an und realisiert eine zusätzlich Abdichtung des Drahtgewindeeinsatzes. In diesem Zusammenhang besteht eine bevorzugte Ausgestaltung des Haltekerns 40 darin, am Haltekern 40 auf Höhe des Dichtlippe 64 eine Absenkung vorzusehen, in die der konische Bereich 62 mit Dichtlippe 64 ausläuft.

Zur Herstellung eines Gussteils wird zunächst der Drahtgewindeeinsatz auf das Gewinde 44 des Haltekerns 40c aufgeschraubt. Dann wird das Dichtelement 60 auf den Haltekern 40c aufgesteckt oder in der bevorzugten Vertiefung 52 der Innenwand 50 der Gussform platziert. Danach wird der Haltekern 40c in der Öffnung 56 der Gussform befestigt, sodass der Drahtgewindeeinsatz über das Gewinde 44 und das Dichtelement 50 abgedichtet ist. Nach dem Ausgie-ßen der Gussform mit Materialschmelze, Aushärten der Materialschmelze und Entformen des Gussteils wird der Haltekern 40c über die Passung 42 aus dem Drahtgewindeeinsatz herausgeschraubt.

Bei der Verwendung eines Haltkerns 40c aus Stahl bietet diese Ausführungsform vorliegender Erfindung eine sehr gute Positioniergenauigkeit des Drahtgewindeeinsatzes in der Gussform, eine hohe mechanische Stabilität sowie eine vollständige Abdichtung des Drahtgewindeeinsatzes gegenüber seiner Umgebung. Diese Vorteile machen dieses Konzept insbesondere interessant für die Anwendung beim Druckguss, da hier mit hohen Gießgeschwindigkeiten von bis zu 100 m/s und hohen Nachdrücken von bis zu 2000 bar in Metallschmelze, vorzugsweise Aluminiumschmelze, gearbeitet wird.

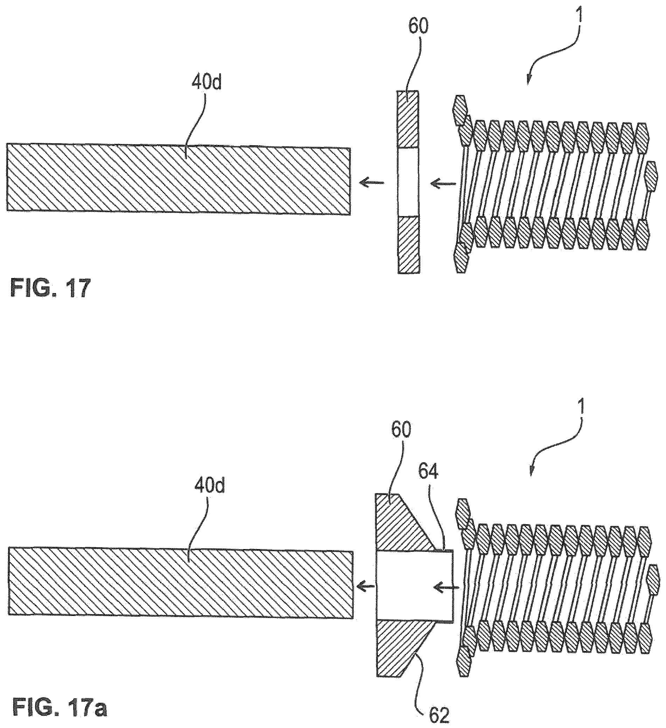

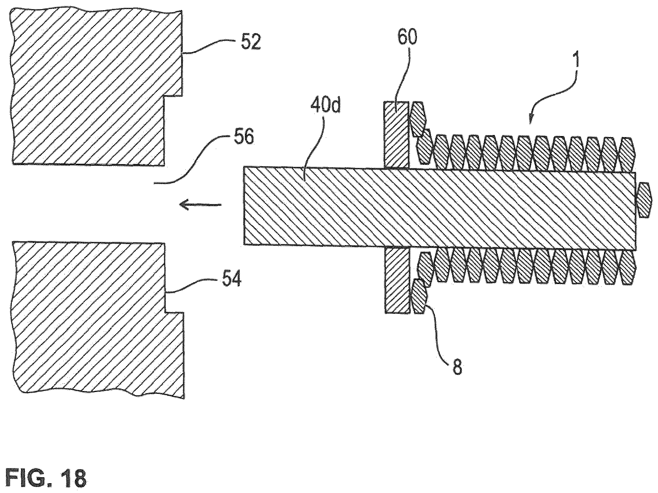

In den Figuren 17 und 18 ist eine Ausgestaltung gezeigt, in der der Haltekern 40d kein Gewinde 44 aufweist. Zur Positionierung des Drahtgewindeeinsatzes 1 in der Gussform wird der Drahtgewindeeinsatz auf den Haltekern 40d aufgesteckt, bevor oder nachdem dieser in der Öffnung 56 der Gussform befestigt worden ist. Zur stirnseitigen Abdichtung des Drahtgewindeeinsatzes wird das Dichtelement 60 in gleicher Weise zwischen dem Drahtgewindeeinsatz 1 und der Innenwand 50 der Gussform angeordnet, wie es in Bezug auf die Figuren 13 und 14 beschrieben worden ist.

Der Haltekern 40d hat in diesem Fall nur die Positionierung des Drahtgewindeeinsatzes in der Gussform zur Aufgabe und bewirkt keinerlei Abdichtung. Die Abdichtung im stirnseitigen Bereich des Drahtgewindeeinsatzes wird durch das Dichtelement 60 erreicht. Dieses Dichtelement 60 verhindert im stirnseitigen Bereich des Drahtgewindeeinsatzes das Einfließen der Metall- oder Kunststoffschmelze in den Gewindegang und das Umfließen der Stirnseite bzw. des Flansches 8 des Drahtgewindeeinsatzes.

Nach dem Gießvorgang wird das Bauteil mit dem eingegossenen Drahtgewindeeinsatz der Gussform entnommen. Der Haltekern 40d kann anschließend mit einem geeigneten Werkzeug aus dem Drahtgewindeeinsatz entfernt werden.

Diese Ausführungsform besitzt in der beschriebenen Weise keine Abdichtung zur flanschabgewandten Stirnseite des Drahtgewindeeinsatzes und zum seitlichen Bereich des Drahtgewindeeinsatzes. Daher ist es bevorzugt bei Gießverfahren mit niedrigeren Drücken und Gießgeschwindigkeiten der Materialschmelze zu verwenden. Die konkreten Gießgeschwindigkeiten sind abhängig von der Gussteilgeometrie, Anschnitten, dem Volumen und dem Gussmaterial. So liegen die Verfahrensbedingungen vorzugsweise bei Gießgeschwindigkeiten in einem Bereich < 20 m/s und bei Drücken <400 bar, insbesondere 0,1 - 10 bar.

Der in den Figuren 17 und 18 dargestellte Haltekern 40d kann sowohl als Vollmaterial als auch als Hohlmaterial (rohrförmig) ausgeführt sein. Erfindungsgemäß bevorzugt sind Haltekerne 40d, die aus Metall, Kunststoff, Keramik oder Kombinationen dieser Materialien bestehen. Bei derartigen Materialkombinationen als Haltekern 40d wird die mechanische Stabilität des Haltekerns über den metallischen Teil des Haltekerns erzielt, während ein weicher Kunststoff, der den metallischen Teil umgibt, die Abdichtung des Drahtgewindeeinsatzes nach außen realisiert. Dieser Kunststoff ist vorzugsweise im Hinblick auf seine Festigkeit derart ausgestaltet, wie es bspw. unter Bezugnahme auf die Figuren 4 und 5 beschrieben worden ist.

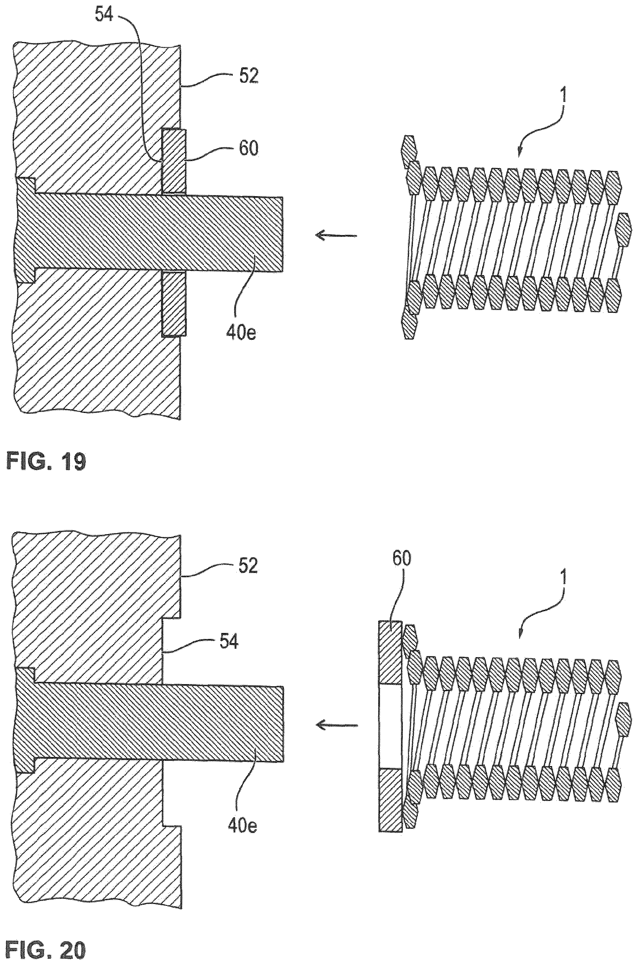

Ein weiteres Beispiel zur Abdichtung und Positionierung des Drahtgewindeeinsatzes innerhalb einer Gussform zur Verwendung in einem Metallguss- oder Kunststoffspritzgussverfahren zeigen die Figuren 19 und 20. In Fig. 19 wird der Drahtgewindeeinsatz direkt auf einen metallischen Haltekern 40e geschoben, der fest in der Gussform verbaut ist. Zur Verhinderung des Umfließens des Drahtgewindeeinsatzes und des Einfließens der Metall- oder Kunststoffschmelze in die Gewindegänge des Drahtgewindeeinsatzes wird zwischen der Innenwand 52, insbesondere der Vertiefung 54, des Formhohlraums 50 und dem Flansch 8 des Drahtgewindeeinsatzes das Dichtelement 60 angeordnet. Das Dichtelement 60 besteht dabei insbesondere aus Silikon mit einer beispielhaften Shore-Härte von 10 oder höher, insbesondere zwischen 15 und 90. Das Dichtelement 60 wird vor dem Aufstecken des Drahtgewindeeinsatzes auf den Haltekern 40e auf den Haltekern 40e geschoben. Gemäß einer weiteren Alternative ist es möglich, das Dichtelement 60 auf dem Flansch 8 des Drahtgewindeeinsatzes zu platzieren und den Drahtgewindeeinsatz gemeinsam mit dem Dichtelement 60 auf den Haltekern 40e aufzuschieben. Diese zweite Verfahrensalternative ist in Fig. 20 schematisch veranschaulicht.

Nach dem Gießvorgang und der Entnahme des Bauteils wird das Dichtelement 60 von dem Gussteil entfernt, sodass der Drahtgewindeeinsatz freiliegt. Diese Ausführungsform besitzt in der beschriebenen Weise keine Abdichtung zur flanschabgewandten Stirnseite des Drahtgewindeeinsatzes und zum seitlichen Bereich des Drahtgewindeeinsatzes. Daher ist es für Gießverfahren mit geringen Drücken und geringen Gießgeschwindigkeiten geeignet, deren Verfahrensbedingungen bereits oben angegeben worden sind.

Bezüglich dieser Ausführungsform ist es ebenfalls bevorzugt, eine abdichtende Kunststoffschicht auf die Innenseite des Drahtgewindeeinsatzes aufzubringen, wie es bezüglich der Ausführungsform der Figuren 17 und 18 beschrieben worden ist.

Die in den verschiedenen Ausgestaltungen beschriebenen Dichtelemente 60 mit der beispielhaften Shore-Härte von 10 oder höher, insbesondere zwischen 15 und 90, werden insbesondere als vorgefertigte Flach-, Ring- oder Formdichtungen realisiert. Es ist ebenfalls möglich, dass Dichtelement 60 direkt als flüssiges Dichtungsmaterial auf den abzudichtenden Bereich des Drahtgewindeeinsatzes aufzutragen. Dies ist beispielsweise mit Silikon im Silikongussverfahren realisierbar.

Es ist ebenfalls bevorzugt, die in den Drahtgewindeeinsatz eingebrachte abdichtende Kunststoffbeschichtung im Inneren des Drahtgewindeeinsatzes zu belassen und später als Schraubensicherung für in den Drahtgewindeeinsatz eingeschraubte Gewindeelemente zu nutzen.

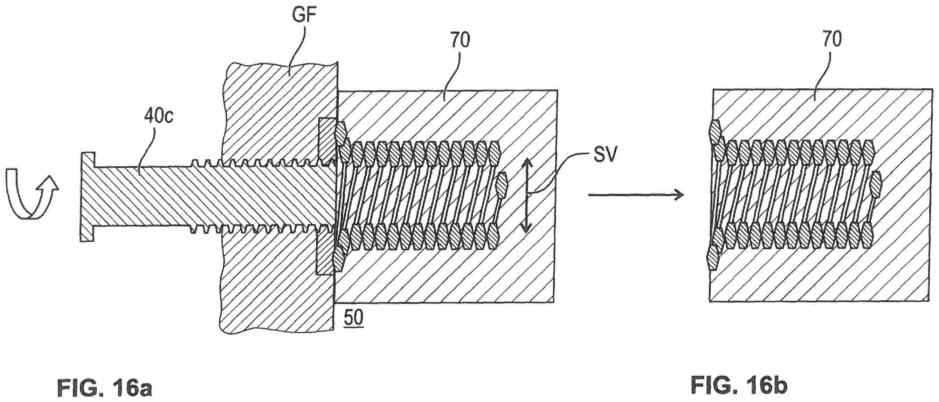

In weiterer bevorzugter Ausgestaltung vorliegender Erfindung ist der Haltekern 40 mit Gewinde 44 aus der Gussform GF mit Öffnung 56 lösbar, noch bevor das Gussteil 70 aus dem Formhohlraum 50 entformt worden ist. Zu diesem Zweck ist vorzugsweise der Haltekern 40c aus der Gussform GF herausdrehbar, wie es schematisch in Fig. 16a veranschaulicht ist.

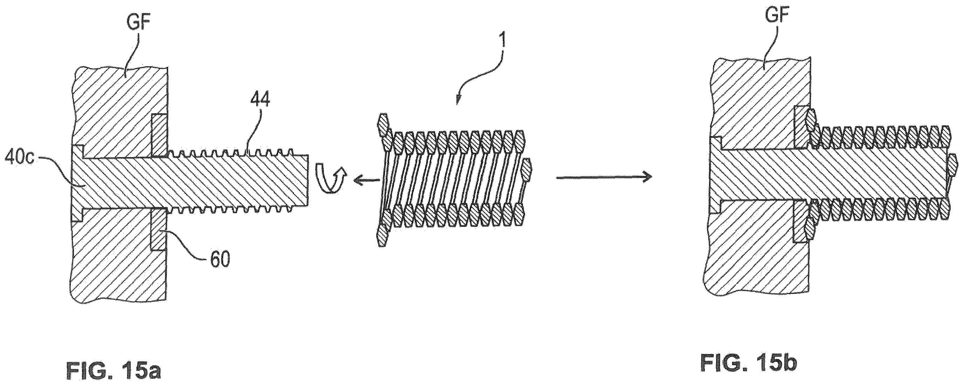

Vor Beginn des Gussverfahrens wird dazu vorzugsweise der Haltekern 40c gemäß Fig. 14 in die Öffnung 56 eingesteckt. Aus dieser ist er nach dem Eindringen der Materialschmelze in den Formhohlraum 50 herausschraubbar, noch bevor das Gussteil 70 entformt worden ist. Es ist ebenfalls bevorzugt, den Haltekern 40c zunächst fest in der Gussform zu installieren, wie es Fig. 15 zeigt. Auf diesen Haltekern 40c wird dann bevorzugt das Einlegeteil 1 aufgeschraubt. Nach dem Gießprozess und vor dem Entformen des Gussteils 70 wird der Haltekern 40c aus dem Einlegeteil 1 und dem Formhohlraum 50 herausgedreht, wie es Fig. 16a zeigt.

In gleicher Weise ist bevorzugt der Haltekern 40d ohne Gewinde 44gemäß Figuren 17 bis 20 aus dem Einlegeteil 1 entfernbar, noch bevor das Gussteil 70 aus dem Formhohlraum 50 entformt worden ist. Gemäß einer bevorzugten Ausführungsform vorliegender Erfindung wird dazu der Haltekern 40e aus dem Einlegeteil 1 heraus gezogen.

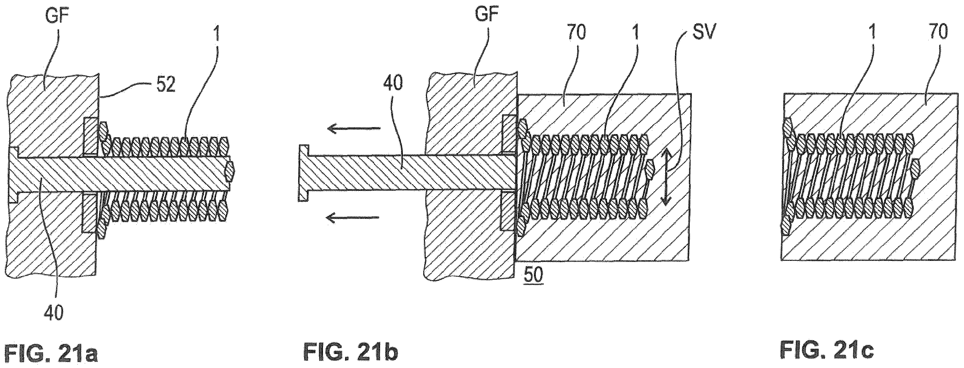

Gemäß den in den Figuren 16 und 21 dargestellten Verfahrensabläufen wird zunächst das Einlegeteil 1 auf dem Haltekern 40; 40e positioniert. Nach dem Füllen des Formhohlraums 50 mit Materialschmelze hoher Geschwindigkeit und bei hohem Nachdruck setzt eine schlagartige Erstarrung der Materialschmelze an der Innenwand 52 des Formhohlraums 50 ein. Zudem finden Schwindungsprozesse SV mit Abkühlung der Materialschmelze statt.

Vorzugsweise wird nach der Erstarrung der Materialschmelze und noch vor dem Entformen des Gussbauteils 70 aus dem Formhohlraum 50 der Haltekern 40c; 40e aus dem entsprechenden Einlegeteil 1 entfernt. Dies erfolgt gemäß einer Ausgestaltung vorliegender Erfindung mit mechanischen, elektromotorischen und/oder hydraulischen Hilfsmitteln. Durch Entfernen des Haltekerns 40c; 40e kann das Einlegeteil 1 den Schwindungsprozessen im Gussbauteil 70 folgen, ohne dass kritische mechanische Spannungen durch das Festhalten des Einlegeteils 1 durch den Haltekern 40c; 40e erzeugt werden. Des Weiteren wird das nachfolgende Entformen des Gussteils 70 erleichtert. Weil nämlich der Haltekern 40; 40e bereits aus dem Formhohlraum 50 entfernt worden ist, kann das Entformen des Gussteils 70 ohne Berücksichtigung der Orientierung des Haltekerns 40c; 40e im Formhohlraum 50 in Bezug auf die Entformungsrichtung erfolgen.

Die oben beschriebenen bevorzugten Ausführungsformen vorliegender Erfindung weisen verschiedene Vorteile auf, die im Folgenden zusammengefasst werden sollen. Bei der spanenden Bearbeitung von Innengewinden in Metallgussteilen ist zur Erzeugung der Gewindegrundlöcher zusätzlich zur nutzbaren Gewindetiefe wegen des Gewindebohreranschnitts und als Spanauffangraum noch ein Grundlochüberhang erforderlich. Durch Anwendung der vorliegenden Erfindung ist es möglich, auf diesen Grundlochüberhang zu verzichten und die erforderliche Nutzgewindetiefe direkt im Metallgussbauteil herzustellen. Des Weiteren hat sich gezeigt, dass die Herstellung von Gussteilen gemäß vorliegender Erfindung weitaus kostengünstiger ist als das Einschneiden eines Gewindes in ein Gussteil nach einem Gießprozess. Ebenfalls von Vorteil ist die abdichtende Kunststoffbeschichtung innerhalb des Drahtgewindeeinsatzes. Diese Kunststoffbeschichtung trägt ebenfalls zum Schutz des Gewindes vor Verschmutzung/Beschädigung bei, die beispielsweise nach dem Entformen des Gussteils und bei der weiteren Verarbeitung des Gussteils auftreten kann.

Zudem wurde festgestellt, dass das Eingießen des Drahtgewindeeinsatzes in ein Gussbauteil schneller geht als eine nach dem Gießprozess stattfindende mechanische Bearbeitung des Gussteils. Daher konnten basierend auf vorliegender Erfindung die Taktzeiten zur Herstellung eines Gussteils mit Gewinde verkürzt werden. Es ist ebenfalls auffällig, dass die eingegossenen Drahtgewindeeinsätze eine höhere Festigkeit zeigen als durch Bohren und Einschneiden in ein Gussteil eingebrachte Gewinde. Dies hat gleichzeitig zur Folge, dass ein Schraubendurchmesser für derartige Gewindebohrungen aufgrund der gesteigerten Tragfähigkeit des Gewindes reduziert werden kann. Zudem ist es mit vorliegender Erfindung möglich, den Bauraum für eine Gewindebohrung oder ein in einem Gussteil befestigtes Einlegeteils zu verringern.

Durch die höhere Widerstandskraft des Gewindeeinsatzes im Vergleich zu Aluminium können Bauteile dieser Art auch bei häufig zu lösenden Verbindungen zum Einsatz kommen. Des Weiteren ist es bevorzugt, das Innere des Einlegeteils, insbesondere des Drahtgewindeeinsatzes, bei der weiteren Bearbeitung des Gussteils durch einen Kunststoffeinsatz zu schützen. Es ist des Weiteren zu erwarten, dass große Gewindeflächen von eingegossenen Drahtgewindeeinsätzen im Vergleich zu bekannten selbstschneidenden Gewindeeinsätzen mit flachen Gewinden deutlich bessere Auszugskräfte liefern.

### Bezugszeichenliste

- 1: Einlegeteil, Drahtgewindeeinsatz
- 2: Windungen
- 4: Spirale
- 6: Hohlraum
- 8: Flansch
- 10: Kunststoffschicht
- 12: Aufnahmeraum
- 14: Kragen
- 16: Kunststoffdichtung
- 18: Sollbruchstelle, a. konisch, b. Kunststoff, c. Gewinde, d. zylindrisch
- 40: Haltekern
- 42: Passung
- 44: Gewinde
- 50: Formhohlraum
- 52: Innenwand
- 54: Vertiefung für Dichtung
- 56: Öffnung für Haltekern
- 60: Dichtelement
- 62: konischer Dichtbereich
- 64: Dichtlippe
- SV: Schwindungsvorgänge
- GF: Gießform
- 70: Gussteil
- 75: Spannungs- und Verformungsform
- 80: Fassung mit Spiel
- 82: Funktionshülse

## Patentansprüche

1. Einlegeteil (1), das in ein Metallgussteil (70) oder ein Kunststoffspritzgussteil (70) einformbar ist, wobei das Einlegeteil (1) ein Drahtgewindeeinsatz ist und die folgenden Merkmale aufweist:
eine zumindest teilweise durchbrochene Außenwand und einen inneren Hohlraum (6), wobei eine gewickelte Drahtwendel des Drahtgewindeeinsatzes radiale Zwischenräume aufweist und der Drahtgewindeeinsatz an seinen gegenüberliegenden Stirnseiten jeweils eine Öffnung umfasst, **dadurch gekennzeichnet, dass**
eine Innenwand des inneren Hohlraums (6) mit Kunststoff (10) beschichtet ist und der Drahtgewindeeinsatz einseitig stirnseitig einen Kunststoffkragen aufweist, der geeignet ausgebildet ist, um in Wirkverbindung mit einer Wand (52) einer Gussform (GF) ein Dichtelement gegen Metallschmelze oder Kunststoffschmelze zu bilden, sodass der innere Hohlraum (6) gegen ein Eindringen von Metallschmelze oder Kunststoff von au-ßen an den Stirnseiten und an der Umfangsseite abgedichtet ist.

2. Einlegeteil (1) gemäß Patentanspruch 1, dessen innerer Hohlraum (6) durch die Kunststoffbeschichtung (10) zumindest teilweise konisch geformt ist.

3. Einlegeteil (1) gemäß einem der vorhergehenden Patentansprüche, wobei der Kunststoff eine wärmeunabhängige Festigkeit oder eine wärmeabhängige Festigkeit aufweist, die mit zunehmender thermischer Belastung abnimmt.

4. Einlegeteil (1) gemäß einem der vorhergehenden Patentansprüche, wobei der Kunststoff mindestens eine Sollbruchstelle (18) aufweist, die ein Versagen des Kunststoffs quer zu einer Längsrichtung des Einlegeteils gewährleistet.

5. Einlegeteil (1) gemäß einem der vorhergehenden Patentansprüche, wobei der innere Hohlraum (6) vollständig mit Kunststoff (16) gefüllt ist, wobei sich der ausgeformte Kunststoff (16) stiftartig und einseitig über das Einlegeteil (1) hinaus erstreckt.

6. Metallgussverfahren oder Kunststoffspritzgussverfahren, mit dem mindestens ein Einlegeteil (1) in einem Gussteil (70) befestigbar ist und das die folgenden Schritte aufweist:
Bereitstellen einer Gussform (GF) (SI) mit einem Formhohlraum (50), **gekennzeichnet durch** die Schritte:
Bereitstellen eines Einlegeteils (1) (SII) gemäß einem der vorhergehenden Patentansprüche,
Positionieren des mindestens einen Einlegeteils (1) innerhalb des Formhohlraums (50) mithilfe einer Positioniervorrichtung (SIII, SIV; SV, SVI),
Anordnen des durch den Kunststoffkragen gebildeten Dichtelements zwischen der Stirnseite des Drahtgewindeeinsatzes und einer Innenwand (52) des Formhohlraums (50), mit dem das Einlegeteil (1) zumindest teilweise gegen ein Eindringen von Metall- oder Kunststoffschmelze abdichtbar ist (SIII, SIV, SV, SVI),
Ausgießen des Formhohlraums (50) mit einer Metall- oder Kunststoffschmelze (SVII) und
Entformen des Gussteils (70) (SVIII).

7. Gussverfahren gemäß Patentanspruch 6, in dem die Positioniervorrichtung aus einem Haltekern (40) aus Metall oder Kunststoff oder Keramik besteht, der in einer Öffnung (56) der Innenwand (52) des Formhohlraums (50) lösbar, vorzugsweise gesteckt, befestigt ist,
Befestigen des Haltekerns (40) mit aufgestecktem oder aufgeschraubtem Einlegeteil (1) mit einseitig stirnseitig umlaufenden Kunststoffkragen als Dichtelement im Formhohlraum (SIII).

8. Gussverfahren gemäß Patentanspruch 6, in dem die Positioniervorrichtung aus einem Haltekern (40) aus Metall oder Kunststoff oder Keramik besteht, der in der Innenwand (52) des Formhohlraums (50) permanent befestigt ist,
Aufstecken oder Aufschrauben des Einlegeteils (1) mit einseitigem stirnseitigen umlaufenden Kunststoffkragen als Dichtelement auf den Haltekern (40) im Formhohlraum (50) (SV).

9. Gussverfahren gemäß Patentanspruch 6, in dem die Positioniervorrichtung aus einem Haltekern (40) aus Metall oder Kunststoff oder Keramik besteht, der in der Innenwand (52) des Formhohlraums (50) bewegbar angeordnet ist,
Aufstecken des Einlegeteils (1) auf den Haltekern (40) ohne Gewinde im Formhohlraum (50) (SV) oder Aufschrauben des Einlegeteils (1) auf den Haltekern (40) mit Gewinde (44) im Formhohlraum (50) (SV), wobei das Einlegeteil (1) den einseitigen stirnseitigen umlaufenden Kunststoffkragen als Dichtelement (60) aufweist.

10. Gussverfahren gemäß Patentanspruch 9, mit dem weiteren Schritt:
Entfernen des Haltekerns (40) mit oder ohne Gewinde (44) aus dem Einlegeteil (1) nach dem Ausgießen des Formhohlraums (50) und vor dem Entformen des Gussteils (70) aus dem Formhohlraum (50), wobei zum Entformen mindestens zwei Formhälften des Formhohlraums (50) ohne eine Abstimmung mit der Orientierung der Längsachse des Haltekerns (40) im Gussteil (70) bewegt werden.

11. Gussverfahren gemäß einem der Patentansprüche 6 bis 10, das ein druckunterstütztes Metallgussverfahren ist, vorzugsweise ein Aluminiumdruckgussverfahren.

## Claims

1. Insert component (1) which is moldable into a metal cast part (70) or a plastic injection cast part (70), wherein the insert component (1) is a wire thread insert and comprises the following features:
an at least partly open outer wall and an inner cavity (6), wherein a wound wire coil of the wire thread insert has radial gaps and the wire thread insert includes an opening each at its opposite face sides, **characterized in that**
an inner wall of the inner cavity (6) is coated with plastic (10) and the wire thread insert has a plastic collar on one side at the face side which is configured suitably so as to form a sealing element against metal melt or plastic melt in interaction with a wall (52) of a mold (GF), so that at the face sides and at the circumferential side, the inner cavity (6) is sealed against an entering of metal melt or plastic from the outside.

2. Insert component (1) according to claim 1, the inner cavity (6) of which is formed at least partly conically due to the plastic coating (10).

3. Insert component (1) according to one of the preceding claims, with the plastic having a heat independent strength or a heat dependent strength, which decreases with increasing thermal load.

4. Insert component (1) according to one of the preceding claims, with the plastic having at least one predetermined breaking point (18) guaranteeing a failure of the plastic transverse to a longitudinal direction of the insert component.

5. Insert component (1) according to one of the preceding claims, wherein the inner cavity (6) is completely filled with plastic (16), wherein the molded plastic (16) extends pen-like and on one side beyond the insert component (1).

6. Metal casting method or plastic injection molding method with which as least one insert component (1) is fastenable in a cast part (70) and which includes the following steps:
providing a casting mold (GF) (SI) having a mold cavity (50), **characterized by** the following steps:
providing an insert component (1) (SII) according to one of the preceding claims,
positioning the at least one insert component (1) within the mold cavity (50) by means of a positioning device (SIII, SIV; SV, SVI),
arranging the sealing element formed by the plastic collar between the face side of the wire thread insert and an inner wall (52) of the mold cavity (50) by means of which the insert component (1) is at least partly sealable against an entering of metal melt or plastic melt (SIII, SIV, SV, SVI),
casting the mold cavity (50) with a metal melt or a plastic melt (SVII) and
demolding the cast part (70) (SVIII).

7. Casting method according to claim 6, in which the positioning device consists of a holding core (40) out of metal or plastic or ceramic which is releasably fastened, preferably plugged, into an opening (56) of the inner wall (52) of the mold cavity (50),
fastening the holding core (40) with plugged on or screwed on insert component (1) with one-sided face-sided circumferential plastic collar as sealing element in the mold cavity (SIII).

8. Casting method according to claim 6, in which the positioning device consists of a holding core (40) out of metal or plastic or ceramic which is permanently fastened in the inner wall (52) of the mold cavity (50),
plugging on or screwing on the insert component (1) with one-sided face-sided circumferential plastic collar as sealing element onto the holding core (40) in the mold cavity (50) (SV).

9. Casting method according to claim 6, in which the positioning device consists of a holding core (40) out of metal or plastic or ceramic which is movably arranged in the inner wall (52) of the mold cavity (50),
plugging the insert component (1) onto the holding core (40) without thread in the mold cavity (50) (SV) or screwing the insert component (1) onto the holding core (40) with thread (44) in the mold cavity (50) (SV), wherein the insert component (1) comprises the one-sided face-sided circumferential plastic collar as sealing element (60).

10. Casting method according to claim 9, with the further step:
removing the holding core (40) with or without thread (44) from the insert component (1) after casting the mold cavity (50) and prior to demolding the cast part (70) from the mold cavity (50) wherein for demolding, at least two mold halves of the mold cavity (50) are moved without any coordination with the orientation of the longitudinal axis of the holding core (40) in the cast part (70).

11. Casting method according to one of the claims 6 to 10, which is a pressure-supported metal casting method, preferably an aluminum die casting method.

## Revendications

1. Pièce d'insertion (1) qui peut être formée dans un moule de métal (70) ou un moule d'injection de plastique (70), dans laquelle la pièce d'insertion (1) est un insert de filetage en fil métallique et comporte les éléments suivants :
une paroi extérieure au moins partiellement percée et une cavité intérieure (6), dans laquelle une bobine de fil enroulé de l'insert de filetage en fil métallique comporte des interstices radiaux, et l'insert de filetage en fil métallique comporte une ouverture sur chacune de ses faces avant opposées, **caractérisée en ce que**
une paroi interne de la cavité interne (6) est revêtue de plastique (10) et l'insert de filetage en fil métallique comporte un collier en plastique unilatéral côté face avant, qui est conçu de manière appropriée pour constituer un élément d'étanchéité contre le métal fondu ou le plastique fondu, en connexion fonctionnelle avec une paroi (52) d'un moule de coulée (GF), de telle sorte que la cavité intérieure (6) est rendue étanche contre une pénétration de métal fondu ou de plastique depuis l'extérieur sur les faces avant et sur le côté périphérique.

2. Pièce d'insertion (1) selon la revendication 1, dont la cavité interne (6) est au moins partiellement conformée en cône par le revêtement plastique (10).

3. Pièce d'insertion (1) selon l'une des revendications précédentes, dans laquelle le plastique a une résistance indépendante de la chaleur, ou une résistance dépendante de la chaleur qui diminue avec l'augmentation de la charge thermique.

4. Pièce d'insertion (1) selon l'une des revendications précédentes, dans laquelle le plastique présente au moins un point de rupture prédéterminé (18) qui garantit que le plastique se rompt transversalement à une direction longitudinale de la pièce d'insertion.

5. Pièce d'insertion (1) selon l'une des revendications précédentes, dans laquelle la cavité intérieure (6) est complètement remplie de plastique (16), et dans laquelle le plastique conformé (16) s'étend en forme de goupille et d'un côté sur la pièce d'insertion (1).

6. Procédé de moulage de métal ou procédé de moulage par injection de matière plastique, avec lequel au moins une pièce d'insertion (1) peut être fixée dans une pièce moulée (70) et comportant les étapes suivantes :
fourniture d'un moule de coulée (GF) (SI) avec une cavité de moule (50), **caractérisée par** les étapes de :
fourniture d'une pièce d'insertion (1) (SII) selon l'une des revendications précédentes,
positionnement de ladite au moins une pièce d'insertion (1) dans la cavité de moule (50) à l'aide d'un dispositif de positionnement (SIII, SIV ; SV, SVI),
agencement de l'élément d'étanchéité constitué par le collier en plastique entre la face avant de l'insert de filetage en fil métallique et une paroi interne (52) de la cavité de moule (50), avec lequel la pièce d'insertion (1) peut être au moins partiellement scellée contre une pénétration de métal fondu ou de plastique fondu (SIII, SIV, SV, SVI),
coulée de la cavité de moule (50) avec une masse fondue de métal ou de plastique (SVII), et
démoulage de la pièce moulée (70) (SVIII).

7. Procédé de moulage selon la revendication 6, dans lequel le dispositif de positionnement consiste en un noyau de maintien (40) en métal ou en plastique ou en céramique, qui est fixé de manière amovible, de préférence enfiché, dans une ouverture (56) de la paroi interne (52) de la cavité de moule (50),
comprenant la fixation du noyau de maintien (40) avec la pièce d'insertion enfichée ou vissée (1) avec un collier en plastique circonférentiel unilatéral côté face avant en tant qu'élément d'étanchéité dans la cavité de moule (SIII).

8. Procédé de moulage selon la revendication 6, dans lequel le dispositif de positionnement est constitué d'un noyau de maintien (40) en métal ou en plastique ou en céramique, qui est fixé de manière permanente dans la paroi interne (52) de la cavité de moule (50),
comprenant l'enfichage ou le vissage de la pièce d'insertion (1) avec un collier en plastique circonférentiel unilatéral côté face avant comme élément d'étanchéité sur le noyau de maintien (40) dans la cavité de moule (50) (SV).

9. Procédé de moulage selon la revendication 6, dans lequel le dispositif de positionnement consiste en un noyau de maintien (40) en métal ou en plastique ou en céramique, qui est agencé de manière mobile dans la paroi interne (52) de la cavité de moule (50),
comprenant l'enfichage de la pièce d'insertion (1) sur le noyau de maintien (40) sans filetage dans la cavité de moule (50) (SV) ou le vissage de la pièce d'insertion (1) sur le noyau de maintien (40) avec un filetage (44) dans la cavité de moule (50) (SV), dans lequel la pièce d'insertion (1) comporte le collier en plastique circonférentiel unilatéral côté face avant comme élément d'étanchéité (60).

10. Procédé de moulage selon la revendication 9, comportant l'étape additionnelle suivante :
enlèvement du noyau de maintien (40) avec ou sans filetage (44) de la pièce d'insertion (1) après que la cavité de moule (50) a été coulée et avant que la pièce moulée (70) ne soit démoulée de la cavité de moule (50), dans lequel, pour le démoulage, au moins deux moitiés de moule de la cavité de moule (50) peuvent être déplacées dans la pièce moulée (70) sans coordination avec l'orientation de l'axe longitudinal du noyau de maintien (40).

11. Procédé de moulage selon l'une des revendications 6 à 10, qui est un procédé de moulage de métal assistée par pression, de préférence un procédé de coulée sous pression d'aluminium.
